# EUROPEAN PATENT SPECIFICATION

(11) **EP 3 764 253 B1**
(45) Date of publication and mention of the grant of the patent: **19.04.2023**
(21) Application number: 18916500.4
(22) Date of filing: 26.04.2018
(51) Int. Cl.: H04L 9/40, G06F 3/0483, G06F 3/0484, G06F 3/04883, G06F 21/32, G06F 21/84, H04W 12/30

(54) **METHOD FOR QUICKLY OPENING APPLICATION OR APPLICATION FUNCTION, AND TERMINAL**
VERFAHREN ZUM SCHNELLEN ÖFFNEN EINER ANWENDUNG ODER EINER ANWENDUNGSFUNKTION UND ENDGERÄT
PROCÉDÉ D'OUVERTURE RAPIDE D'APPLICATION OU DE FONCTION D'APPLICATION, ET TERMINAL

(43) Date of publication of application: 13.01.2021
(73) Proprietor: HUAWEI TECHNOLOGIES CO., LTD., Shenzhen, Guangdong 518129 (CN)
(72) Inventor: LI, Zhan, Shenzhen, Guangdong 518129 (CN)
(74) Representative: Gill Jennings & Every LLP
(86) International application number: PCT/CN2018/084705
(87) International publication number: WO 2019/205065

(56) References cited:
- EP-A1- 3 101 868
- CN-A- 102 893 249
- CN-A- 102 999 268
- CN-A- 103 795 868
- CN-A- 106 355 075
- CN-A- 106 557 671
- CN-A- 106 557 671
- US-A1- 2016 063 230
- US-A1- 2017 264 605
- Explaining Android: "[Android O] Customizing the Lock Screen Shortcuts", , 27 March 2017 (2017-03-27), XP055917460, Retrieved from the Internet: URL:https://www.youtube.com/watch?v=KkHEJh q0b5k [retrieved on 2022-05-03]

## Description

### TECHNICAL field

Embodiments of this application relate to the field of terminals, and in particular, to a method for quickly opening an application or an application function, and a terminal.

### Background

Nowadays, terminals such as mobile phones have become communications tools essential to people's daily lives and work. In addition, with rapid development of science and technology, pace of people's lives are increasingly fast, and people also expect increasingly efficient interaction between them and the terminals. Currently, to reduce power consumption of the terminals, when a user does not use a terminal such as a mobile phone, the mobile phone is locked. After the mobile phone is locked, if a screen of the mobile phone is lit up in this case, the mobile phone may display a lock screen interface.
EP3101868A1 describes manipulating user interfaces based on fingerprint sensor inputs. US2016063230A1 describes user authentication for a user device leveraging one or more fingerprint sensor regions installed in the device capable of detecting and/or recognizing a user's fingerprints.
US 2017/264605 A1 describes a process for activating an organization application with a first unlock user interface and a second unlock user interface.
[Android O] Customizing the Lock Screen Shortcuts (https://www.youtube.com/watch?v=KkHEJhq0b5k&t=3s) describes lock screen shortcuts.

### Summary

Embodiments of this invention provide a display method, a terminal, and a computer storage medium as defined in the appended claims, so that lock screen interfaces of the terminal are enriched, and interaction between a user and the terminal is more efficient. The scope of protection is defined by the appended claims.

To achieve the foregoing objective, the following technical solutions are used in the embodiments of this application.

According to a first aspect of the embodiments of this application, a display method is provided. The display method may be applied to a terminal, the terminal may include a touchscreen, a fingerprint recognizer is configured in the touchscreen, and the display method may include:

The terminal displays a home screen. The terminal receives a first operation performed by a user. The terminal is locked in response to the first operation. When the terminal is in a lock screen state, if the terminal receives a second operation of the user, the terminal may display a first lock screen interface in response to the second operation. When the terminal is in the lock screen state, if the terminal receives a third operation performed by the user on the touchscreen, in response to the third operation, the terminal may capture fingerprint information of the user by using the fingerprint recognizer. The terminal may display a second lock screen interface in response to successful authentication on the captured fingerprint information. The second lock screen interface is different from the first lock screen interface. The terminal receives a fourth operation of the user on the second lock screen interface. The terminal may display the home screen in response to the fourth operation.

According to the display method provided in this embodiment of this application, when the terminal is in the lock screen state, if the terminal receives the second operation, such as an operation of lighting up a screen, performed by the user, the terminal may display the first lock screen interface in response to the second operation. If the terminal receives the third operation of the user, for example, an operation of triggering the fingerprint recognizer configured in the touchscreen to capture the fingerprint information of the user, the terminal may capture the fingerprint information of the user, and display the second lock screen interface that is different from the first lock screen interface in response to the successful fingerprint authentication for the user. Lock screen interfaces of the terminal are enriched. In addition, a plurality of lock screen interfaces are provided, so that the terminal in the lock screen state can provide more abundant convenience access entrances for the user. Therefore, interaction between the terminal and the user is more efficient.

With reference to the first aspect, in a possible implementation, the second lock screen interface may include a navigation menu, and the navigation menu may include at least one control; and the control may be at least one of the following: an icon of an application, an identifier of a function of the application, an icon of a folder, an identifier of a notification message, and an unlock icon. In this way, the terminal displays the second lock screen interface including the navigation menu, so that the user may directly operate the control included in the navigation menu on the lock screen interface.

With reference to the first aspect or the foregoing possible implementation, in another possible implementation, when the navigation menu includes the unlock icon, the displaying, by the terminal, the home screen in response to the fourth operation may specifically include: when the fourth operation is a click operation performed by the user on the unlock icon, or the fourth operation is a slide operation and a termination point of the slide operation is the unlock icon, displaying, by the terminal, the home screen in response to the fourth operation. In this way, after the terminal displays the second lock screen interface including the navigation menu, the user may open the home screen of the terminal by operating the unlock icon included in the navigation menu.

With reference to the first aspect or the foregoing possible implementations, in another possible implementation, the method may further include: when the fourth operation is a click operation performed by the user on a first control included in the navigation menu, or the fourth operation is a slide operation and a termination point of the slide operation is the first control included in the navigation menu, in response to the fourth operation, displaying, by the terminal, a function interface of a first application associated with the first control. In this way, after receiving the operation performed by the user on the control included in the navigation menu on the lock screen interface, in response to the operation performed by the user, the terminal may directly open the function interface of the application associated with the control operated by the user. Complexity of the operation of the user is reduced, use efficiency of the terminal is improved, and efficient interaction between the terminal and the user is implemented.

With reference to the first aspect or the foregoing possible implementations, in another possible implementation, when the fourth operation is the slide operation, the third operation and the fourth operation may be continuous operations of a finger of the user without leaving the touchscreen. In this way, the user may open, by performing continuous operations, the function interface of the application associated with the operated control, thereby improving user experience.

With reference to the first aspect or the foregoing possible implementations, in another possible implementation, when the terminal receives the third operation performed by the user on the touchscreen, the terminal may be in a screen-off state. In the screen-off state, the touchscreen may display a fingerprint pattern, and a location of the fingerprint pattern is associated with the fingerprint recognizer. In this case, the receiving, by the terminal, a third operation performed by the user on the touchscreen may specifically include: receiving, by the terminal, the third operation performed by the user at the location at which the fingerprint pattern is displayed. In this way, when the terminal is in the screen-off state, a location of the fingerprint recognizer in the touchscreen is prompted to the user by displaying the fingerprint pattern. It is convenient for the user to enter the fingerprint information, thereby improving user experience.

With reference to the first aspect or the foregoing possible implementations, in another possible implementation, the first lock screen interface may include a fingerprint pattern, and a location of the fingerprint pattern is associated with the fingerprint recognizer; and the receiving, by the terminal, a third operation performed by the user on the touchscreen may specifically include: receiving, by the terminal, the third operation performed by the user at the location at which the fingerprint pattern included in the first lock screen interface is displayed. In this way, a location of the fingerprint recognizer in the touchscreen is prompted to the user by displaying the fingerprint pattern. It is convenient for the user to enter the fingerprint information, thereby improving user experience.

With reference to the first aspect or the foregoing possible implementations, in another possible implementation, before the receiving, by the terminal, a third operation performed by the user on the touchscreen, the method may further include: receiving, by the terminal, a notification message; and lighting up, by the terminal, the touchscreen and displaying the first lock screen interface on the touchscreen, where the first lock screen interface may include a fingerprint pattern, and a location of the fingerprint pattern is associated with the fingerprint recognizer; and the receiving, by the terminal, a third operation performed by the user on the touchscreen may specifically include: receiving, by the terminal, the third operation performed by the user at the location at which the fingerprint pattern included in the first lock screen interface is displayed. In this way, when the terminal receives the notification message, the terminal lights up the touchscreen, and displays the lock screen interface including the fingerprint pattern, to prompt a location of the fingerprint recognizer in the touchscreen to the user. It is convenient for the user to enter the fingerprint information, thereby improving user experience.

With reference to the first aspect or the foregoing possible implementations, in another possible implementation, when there is an unread notification message, the terminal displays the second lock screen interface in response to the successful authentication on the captured fingerprint information; or when there is no unread notification message, the terminal displays the home screen in response to the successful authentication on the captured fingerprint information. In this way, when there is an unread notification message, the second lock screen interface is displayed, to provide an entrance that can quickly visit the unread notification message to the user, so that the lock screen interface displayed by the terminal is closer to a use requirement of the user, thereby improving user experience.

With reference to the first aspect or the foregoing possible implementations, in another possible implementation, the method may further include: displaying, by the terminal, a password login interface in response to unsuccessful authentication on the captured fingerprint information; receiving, by the terminal, a login password entered by the user on the password login interface; and displaying, by the terminal, the second lock screen interface in response to successful authentication on the login password. In this way, when the fingerprint authentication is unsuccessful, the password login interface is automatically displayed, to guide the user to unlock the terminal in another authentication manner.

With reference to the first aspect or the foregoing possible implementations, in another possible implementation, the function of the application is a payment function; and the identifier of the function of the application is a valid payment code of the payment function. Alternatively, when the first control is an identifier of the payment function, the displaying a function interface of a terminal function corresponding to the first control may specifically include: displaying, by the terminal, a function interface of the payment function, where the function interface includes the valid payment code of the payment function. In this way, the valid payment code is displayed on the lock screen interface of the terminal, or after the user operates the identifier of the payment function included in the navigation menu, the terminal may directly open the function interface of the payment function in response to the operation performed by the user, so that the terminal may display the valid payment code of the payment function without performing a series of operations by the user, for another user to scan, to implement the payment function. The operation complexity is further reduced, the use efficiency of the terminal is improved, the efficient interaction between the terminal and the user is implemented, and user experience is improved.

With reference to the first aspect or the foregoing possible implementations, in another possible implementation, the identifier of the notification message may be a prompt box, before the fingerprint authentication, the prompt box may include the notification message displayed in an encryption manner, and after the authentication on the captured fingerprint information succeeds, the prompt box may include content of the notification message. In this way, privacy of the user is protected, and the user may further be enabled to preliminarily learn of the notification message on the lock screen interface, thereby improving the use experience of the user. When the first control is the identifier of the notification message, the displaying a function interface of a first application associated with the first control may specifically include: displaying, by the terminal, a details interface of the notification message, where the details interface may include content of the notification message. In this way, after the user operates the identifier of the notification message included in the navigation menu, the terminal may directly open the details interface of the notification message in response to the operation of the user, so that the terminal can view detailed content of the notification message without performing a series of operations by the user. The operation complexity is further reduced, the use efficiency of the terminal is improved, the efficient interaction between the terminal and the user is implemented, and user experience is improved.

With reference to the first aspect or the foregoing possible implementations, in another possible implementation, the control included in the navigation menu may be predefined, or may be recommended by the terminal, or may be set by the user. In this way, the user sets, based on personal preference, the control included in the navigation menu; or the terminal recommends, based on a scenario, the control included in the navigation menu. This helps the user quickly find and open a function interface of an application associated with the corresponding control, thereby further improving the use experience of the user.

According to a second aspect of the embodiments of this application, a display apparatus is provided. The display apparatus may be applied to a terminal, the terminal may include a touchscreen, a fingerprint recognizer is configured in the touchscreen, and the display apparatus may include a display unit, an input unit, a locking unit, and a capturing unit, where the display unit may be configured to display a home screen; the input unit may be configured to receive a first operation performed by a user; the locking unit may be configured to lock the terminal in response to the first operation received by the input unit; the input unit may further be configured to: when the terminal is in a lock screen state, receive a second operation of the user; the display unit may further be configured to display a first lock screen interface in response to the second operation received by the input unit; the input unit may further be configured to: when the terminal is in the lock screen state, receive a third operation performed by the user on the touchscreen; the capturing unit may be configured to: in response to the third operation received by the input unit, capture fingerprint information of the user by using the fingerprint recognizer; the display unit may further be configured to display a second lock screen interface in response to successful authentication on the fingerprint information captured by the capturing unit, where the second lock screen interface is different from the first lock screen interface; the input unit may further be configured to receive a fourth operation of the user on the second lock screen interface displayed by the display unit; and the display unit may further be configured to display the home screen in response to the fourth operation received by the input unit.

With reference to the second aspect, in a possible implementation, the second lock screen interface displayed by the display unit may include a navigation menu, and the navigation menu may include at least one control; and the control may be at least one of the following: an icon of an application, an identifier of a function of the application, an icon of a folder, an identifier of a notification message, and an unlock icon.

With reference to the second aspect or the foregoing possible implementation, in another possible implementation, when the navigation menu includes the unlock icon, the display unit may be specifically configured to: when the fourth operation is a click operation performed by the user on the unlock icon, or the fourth operation is a slide operation and a termination point of the slide operation is the unlock icon, display the home screen in response to the fourth operation.

With reference to the second aspect or the foregoing possible implementations, in another possible implementation, the display unit may further be configured to: when the fourth operation is a click operation performed by the user on a first control included in the navigation menu, or the fourth operation is a slide operation and a termination point of the slide operation is the first control included in the navigation menu, in response to the fourth operation, display a function interface of a first application associated with the first control.

With reference to the second aspect or the foregoing possible implementations, in another possible implementation, when the fourth operation is the slide operation, the third operation and the fourth operation may be continuous operations of a finger of the user without leaving the touchscreen.

With reference to the second aspect or the foregoing possible implementations, in another possible implementation, when the input unit receives the third operation performed by the user on the touchscreen, the terminal is in a screen-off state. In the screen-off state, the touchscreen displays a fingerprint pattern, and a location of the fingerprint pattern is associated with the fingerprint recognizer; and the input unit may be specifically configured to receive the third operation performed by the user at the location at which the fingerprint pattern is displayed.

With reference to the second aspect or the foregoing possible implementations, in another possible implementation, the first lock screen interface may include a fingerprint pattern, and a location of the fingerprint pattern is associated with the fingerprint recognizer; and the input unit may be specifically configured to receive the third operation performed by the user at the location at which the fingerprint pattern included in the first lock screen interface is displayed.

With reference to the second aspect or the foregoing possible implementations, in another possible implementation, the display apparatus may further include a receiving unit and a control unit; the receiving unit may be configured to receive a notification message; and the control unit may be configured to light up the touchscreen, where the display unit may further be configured to display the first lock screen interface on the touchscreen, the first lock screen interface may include a fingerprint pattern, and a location of the fingerprint pattern is associated with the fingerprint recognizer; and the input unit may be specifically configured to receive the third operation performed by the user at the location at which the fingerprint pattern included in the first lock screen interface is displayed.

With reference to the second aspect or the foregoing possible implementations, in another possible implementation, the display unit may be specifically configured to: when there is an unread notification message, display the second lock screen interface in response to the successful authentication on the captured fingerprint information; and the display unit may further be configured to: when there is no unread notification message, display the home screen in response to the successful authentication on the captured fingerprint information.

With reference to the second aspect or the foregoing possible implementations, in another possible implementation, the display unit may further be configured to display a password login interface in response to unsuccessful authentication on the captured fingerprint information; the input unit may further be configured to receive a login password entered by the user on the password login interface displayed by the display unit; and the display unit may further be configured to display the second lock screen interface in response to successful authentication on the login password.

With reference to the second aspect or the foregoing possible implementations, in another possible implementation, a function of the application is a payment function; and the identifier of the function of the application is the valid payment code of the payment function; or when the first control is an identifier of the payment function, the display unit may be specifically configured to display a function interface of the payment function, and the function interface includes the valid payment code of the payment function.

With reference to the second aspect or the foregoing possible implementations, in another possible implementation, the identifier of the notification message may be a prompt box, before the fingerprint authentication, the prompt box may include the notification message displayed in an encryption manner, and after the authentication on the captured fingerprint information succeeds, the prompt box may include content of the notification message; or when the first control is the identifier of the notification message, the display unit may be specifically configured to display a details interface of the notification message, and the details interface may include content of the notification message.

With reference to the second aspect or the foregoing possible implementations, in another possible implementation, the control included in the navigation menu may be predefined, or may be recommended by the terminal, or may be set by the user.

According to a third aspect of the embodiments of this application, a terminal is provided. The terminal may include one or more processors, a memory, a touchscreen, and one or more computer programs; and the components may be connected by using one or more communications buses. The touchscreen may include a touch-sensitive surface and a display. The one or more computer programs are stored in the memory and are configured to be executed by the one or more processors; and the one or more computer programs include instructions, when the one or more processors execute the instructions, the touchscreen may be configured to display a home screen as indicated by the processor; the touchscreen may further be configured to: receive a first operation performed by a user, and lock the terminal in response to the first operation as indicated by the processor; the touchscreen may further be configured to: when the terminal is in a lock screen state, receive a second operation of the user, and display a first lock screen interface in response to the second operation as indicated by the processor; the touchscreen may further be configured to: when the terminal is in the lock screen state, receive a third operation performed by the user on the touchscreen, and in response to the third operation as indicated by the processor, capture fingerprint information of the user by using the fingerprint recognizer; the touchscreen may further be configured to: display a second lock screen interface in response to successful authentication on the captured fingerprint information, as indicated by the processor, where the second lock screen interface is different from the first lock screen interface; and the touchscreen may further be configured to: receive a fourth operation of the user on the second lock screen interface, and display the home screen in response to the fourth operation as indicated by the processor.

With reference to the third aspect, in a possible implementation, the second lock screen interface may include a navigation menu, and the navigation menu may include at least one control; and the control may be at least one of the following: an icon of an application, an identifier of a function of the application, an icon of a folder, an identifier of a notification message, and an unlock icon.

With reference to the third aspect or the foregoing possible implementation, in another possible implementation, when the navigation menu includes the unlock icon, the touchscreen may be specifically configured to: when the fourth operation is a click operation performed by the user on the unlock icon, or the fourth operation is a slide operation and a termination point of the slide operation is the unlock icon, display the home screen in response to the fourth operation as indicated by the processor.

With reference to the third aspect or the foregoing possible implementations, in another possible implementation, the touchscreen may further be configured to: when the fourth operation is a click operation performed by the user on a first control included in the navigation menu, or the fourth operation is a slide operation and a termination point of the slide operation is the first control included in the navigation menu, in response to the fourth operation as indicated by the processor, display a function interface of a first application associated with the first control.

With reference to the third aspect or the foregoing possible implementations, in another possible implementation, when the fourth operation is the slide operation, the third operation and the fourth operation may be continuous operations of a finger of the user without leaving the touchscreen.

With reference to the third aspect or the foregoing possible implementations, in another possible implementation, when the touchscreen receives the third operation performed by the user on the touchscreen, the terminal is in a screen-off state. In the screen-off state, the touchscreen displays a fingerprint pattern, and a location of the fingerprint pattern is associated with the fingerprint recognizer; and the touchscreen may be specifically configured to receive the third operation performed by the user at the location at which the fingerprint pattern is displayed.

With reference to the third aspect or the foregoing possible implementations, in another possible implementation, the first lock screen interface may include a fingerprint pattern, and a location of the fingerprint pattern is associated with the fingerprint recognizer; and the touchscreen may be specifically configured to receive the third operation performed by the user at the location at which the fingerprint pattern included in the first lock screen interface is displayed.

With reference to the third aspect or the foregoing possible implementations, in another possible implementation, the processor may further be configured to: receive a notification message, and light up the touchscreen; the touchscreen may further be configured to display the first lock screen interface on the touchscreen as indicated by the processor, the first lock screen interface may include a fingerprint pattern, and a location of the fingerprint pattern is associated with the fingerprint recognizer; and the touchscreen may be specifically configured to receive the third operation performed by the user at the location at which the fingerprint pattern included in the first lock screen interface is displayed.

With reference to the third aspect or the foregoing possible implementations, in another possible implementation, the touchscreen may be specifically configured to: when there is an unread notification message, display the second lock screen interface in response to the successful authentication on the captured fingerprint information, as indicated by the processor; and the touchscreen may further be configured to: when there is no unread notification message, display the home screen in response to the successful authentication on the captured fingerprint information, as indicated by the processor.

With reference to the third aspect or the foregoing possible implementations, in another possible implementation, the touchscreen may further be configured to display a password login interface in response to unsuccessful authentication on the captured fingerprint information, as indicated by the processor; receive a login password entered by the user on the password login interface; and display the second lock screen interface in response to successful authentication on the login password, as indicated by the processor.

With reference to the third aspect or the foregoing possible implementations, in another possible implementation, a function of the application is a payment function; and the identifier of the function of the application is the valid payment code of the payment function; or when the first control is an identifier of the payment function, the touchscreen may be specifically configured to display a function interface of the payment function as indicated by the processor, and the function interface includes the valid payment code of the payment function.

With reference to the third aspect or the foregoing possible implementations, in another possible implementation, the identifier of the notification message may be a prompt box, before the fingerprint authentication, the prompt box may include the notification message displayed in an encryption manner, and after the authentication on the captured fingerprint information succeeds, the prompt box may include content of the notification message; or when the first control is the identifier of the notification message, the touchscreen may be specifically configured to display a details interface of the notification message as indicated by the processor, and the details interface may include content of the notification message.

With reference to the third aspect or the foregoing possible implementations, in another possible implementation, the control included in the navigation menu may be predefined, or may be recommended by the terminal, or may be set by the user.

According to a fourth aspect of the embodiments of this application, a computer storage medium is provided. The computer storage medium includes a computer instruction, and when the computer instruction is run on a terminal, the terminal is enabled to perform the display method according to any one of the first aspect or the possible implementations of the first aspect.

According to a fifth aspect of the embodiments of this application, a computer program product is provided. When the computer program product is run on a computer, the computer is enabled to perform the display method according to any one of the first aspect or the possible implementations of the first aspect.

According to a sixth aspect of the embodiments of this application, a display method is provided. The display method may be applied to a terminal, the terminal may include a touchscreen, a fingerprint recognizer is configured in the touchscreen, and the display method may include:

The terminal displays a home screen. The terminal receives a first operation performed by a user. The terminal is locked in response to the first operation. When the terminal is in a lock screen state, if the terminal receives a second operation of the user, the terminal may display a first lock screen interface in response to the second operation. When the terminal is in the lock screen state, if the terminal receives a third operation performed by the user on the touchscreen, in response to the third operation, the terminal may capture fingerprint information of the user by using the fingerprint recognizer. The terminal may display a second lock screen interface in response to successful authentication on the captured fingerprint information. The second lock screen interface is different from the first lock screen interface. The second lock screen interface includes a valid payment code of a payment function of an application. In this way, the valid payment code is displayed on the lock screen interface of the terminal, so that the terminal can display the valid payment code of the payment function without performing a series of operations by the user, for another user to scan, to implement the payment function. Operation complexity is reduced, use efficiency of the terminal is improved, efficient interaction between the terminal and the user is implemented, and user experience is improved.

According to a seventh aspect of the embodiments of this application, a display method is provided. The display method may be applied to a terminal, the terminal may include a touchscreen, a fingerprint recognizer is configured in the touchscreen, and the display method may include:

When the terminal is locked, the terminal receives a notification message. The terminal displays a first lock screen interface. The first lock screen interface includes the notification message displayed in an encryption manner. The terminal receives a third operation of a user. In response to the third operation, the terminal may capture fingerprint information of the user by using the fingerprint recognizer; and the terminal may display a second lock screen interface in response to successful authentication on the captured fingerprint information, and the second lock screen interface includes the notification message displayed in plaintext. The notification message displayed in plaintext may be a part or all of content of the notification message. The terminal receives a fourth operation of the user on the second lock screen interface. In response to the fourth operation, the terminal displays a function interface of an application associated with the notification message, and the function interface includes all the content of the notification message. In this way, when receiving the notification message, the terminal displays the received notification message in the encryption manner on the lock screen interface, so that privacy of the user is protected. After the authentication on the fingerprint information of the user succeeds, a part or all of the notification message is displayed on the lock screen interface. This helps the user preliminarily learn of the notification message, so that the user determines whether the received notification message needs to be viewed. The privacy of the user is protected, and the terminal is enabled to be more intelligent.

It should be understood that the descriptions of the technical features, technical solutions, beneficial effects, or similar language in this application does not imply that all features and advantages can be implemented in any single embodiment. On the contrary, it may be understood that the descriptions of the features or beneficial effects means that at least one embodiment includes a particular technical feature, technical solution, or beneficial effect. Therefore, the descriptions of the technical features, technical solutions, or beneficial effects in this specification does not necessarily refer to the same embodiment. Further, the technical features, technical solutions, and beneficial effects described in the embodiments may alternatively be combined in any suitable manner. A person skilled in the art may understand that embodiments may be implemented without one or more particular technical features, technical solutions, or beneficial effects of particular embodiments. In other embodiments, additional technical features and beneficial effects may further be identified in a particular embodiment that does not embody all of the embodiments.

### Brief description of drawings

FIG. 1 is a schematic structural diagram of hardware of a mobile phone according to an embodiment of this application;
FIG. 2 is a schematic architectural diagram of software of an ANDROID@ operating system in a terminal according to an embodiment of this application;
FIG. 3 is a schematic flowchart of a display method according to an embodiment of this application;
FIG. 4A and FIG. 4B are a schematic diagram of some graphical user interfaces displayed on a terminal according to some embodiments of this application;
FIG. 5 is a schematic diagram of some graphical user interfaces displayed on a terminal according to some other embodiments of this application;
FIG. 6 is a schematic diagram of some graphical user interfaces displayed on a terminal according to some other embodiments of this application;
FIG. 7A and FIG. 7B are a schematic diagram of some graphical user interfaces displayed on a terminal according to some other embodiments of this application;
FIG. 8A and FIG. 8B are a schematic diagram of some graphical user interfaces displayed on a terminal according to some other embodiments of this application;
FIG. 9 is a schematic flowchart of a display method according to some other embodiments of this application;
FIG. 10A and FIG. 10B are a schematic diagram of some graphical user interfaces displayed on a terminal according to some other embodiments of this application;
FIG. 11A is a schematic diagram of some graphical user interfaces displayed on a terminal according to some other embodiments of this application;
FIG. 11B-a, FIG. 11B-b, and FIG. 11B-c are a schematic diagram of some graphical user interfaces displayed on a terminal according to some other embodiments of this application;

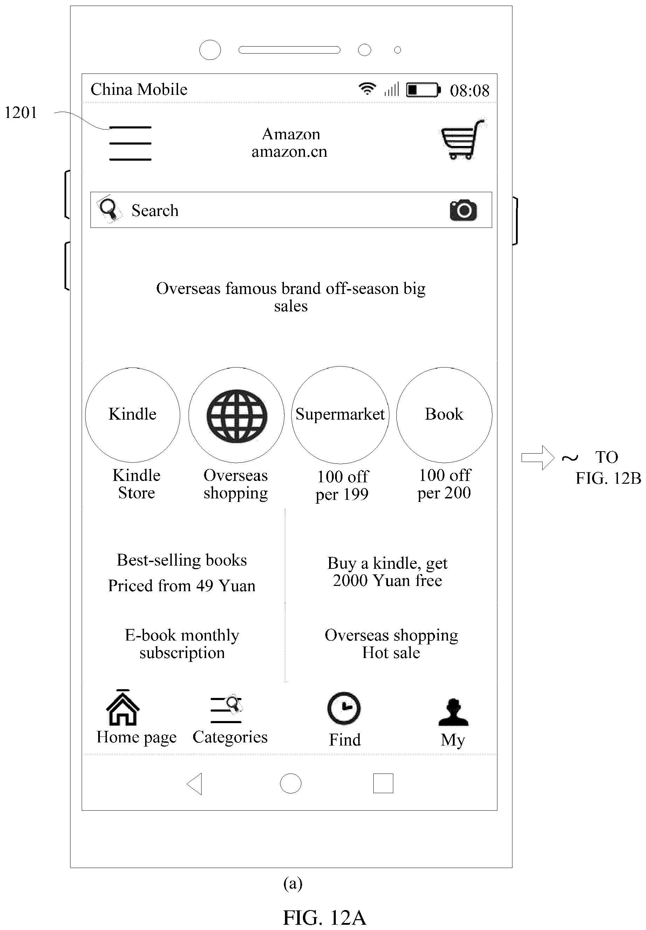

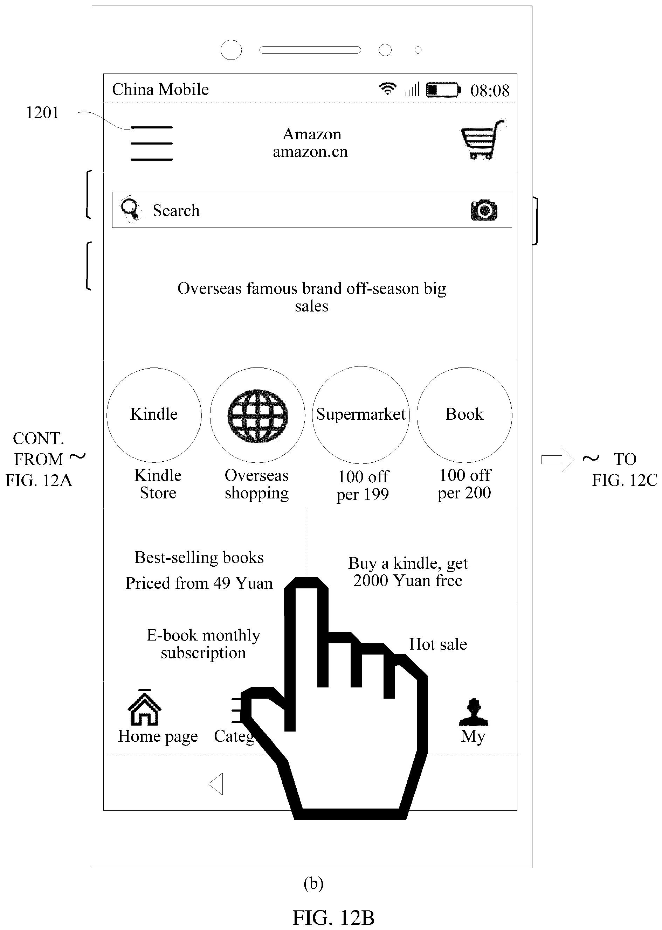

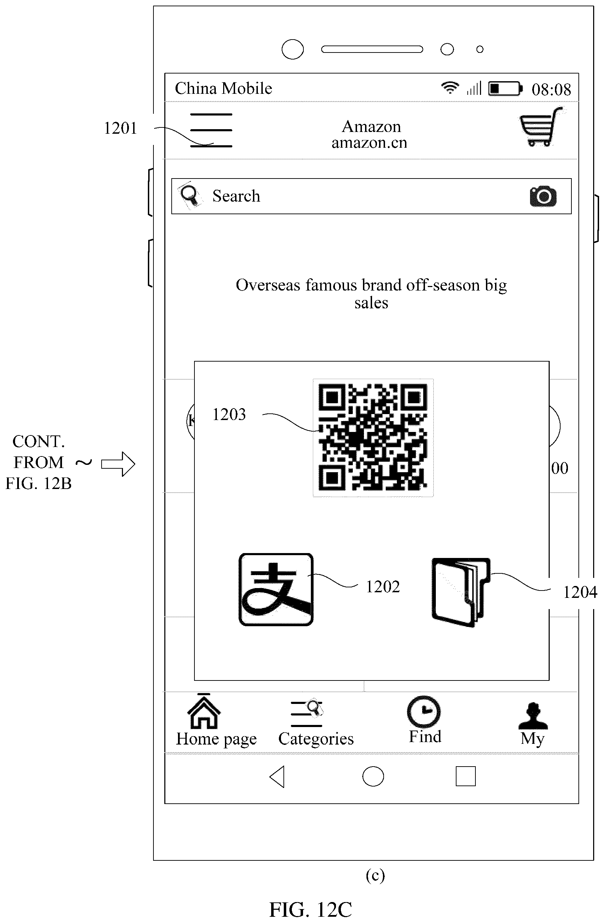

FIG. 12A, FIG. 12B, and FIG. 12C are a schematic diagram of some graphical user interfaces displayed on a terminal according to some other embodiments of this application;

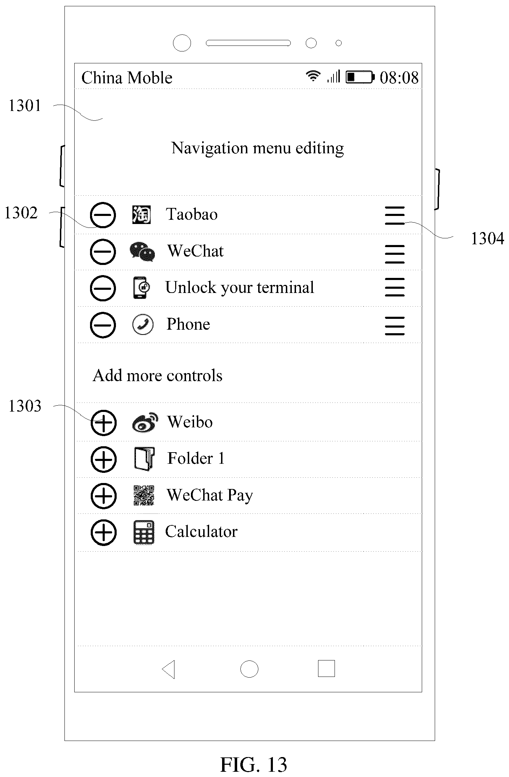

FIG. 13 is a schematic diagram of some graphical user interfaces displayed on a terminal according to some other embodiments of this application;

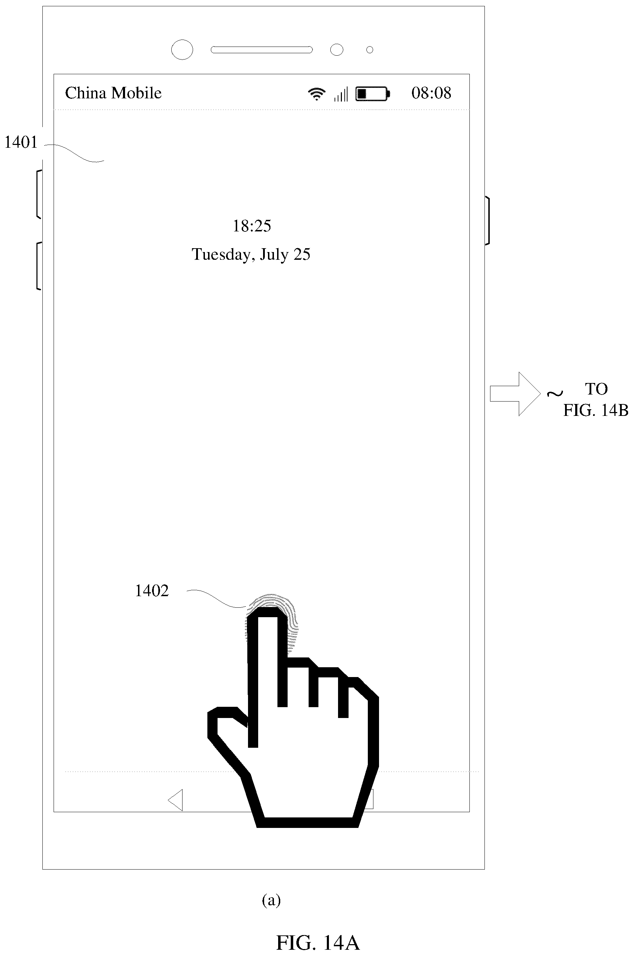

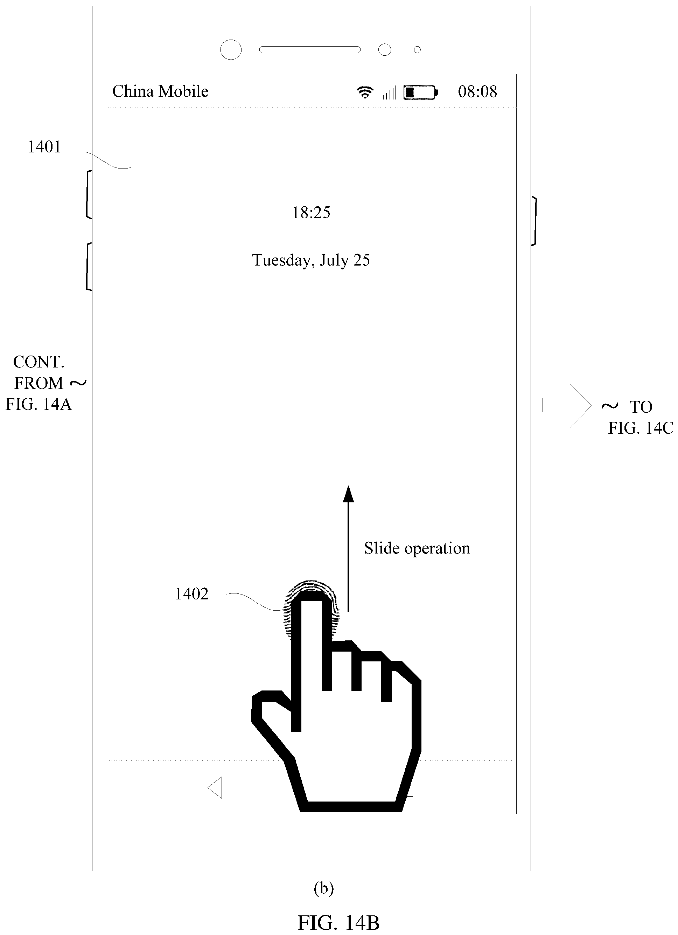

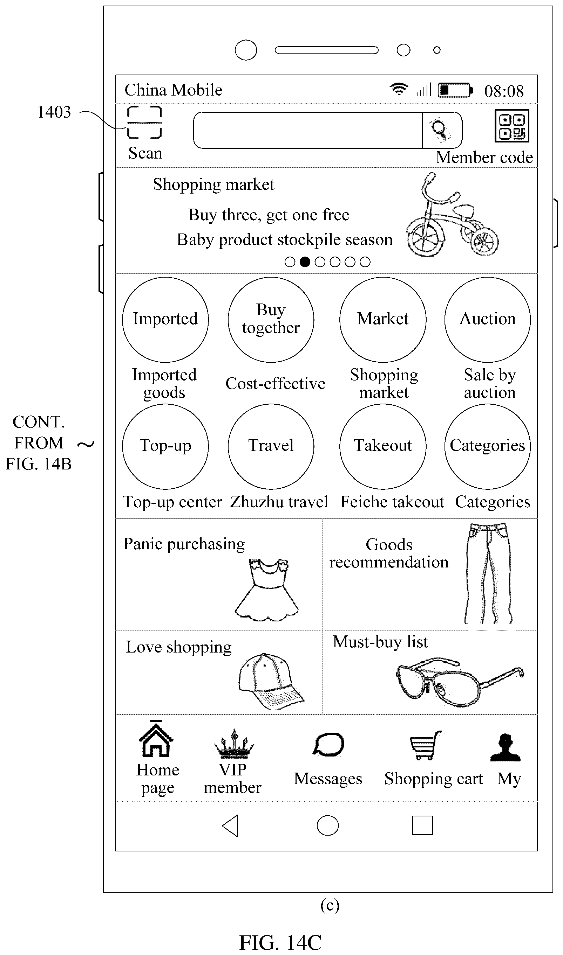

FIG. 14A, FIG. 14B, and FIG. 14C are a schematic diagram of some graphical user interfaces displayed on a terminal according to some other embodiments of this application;

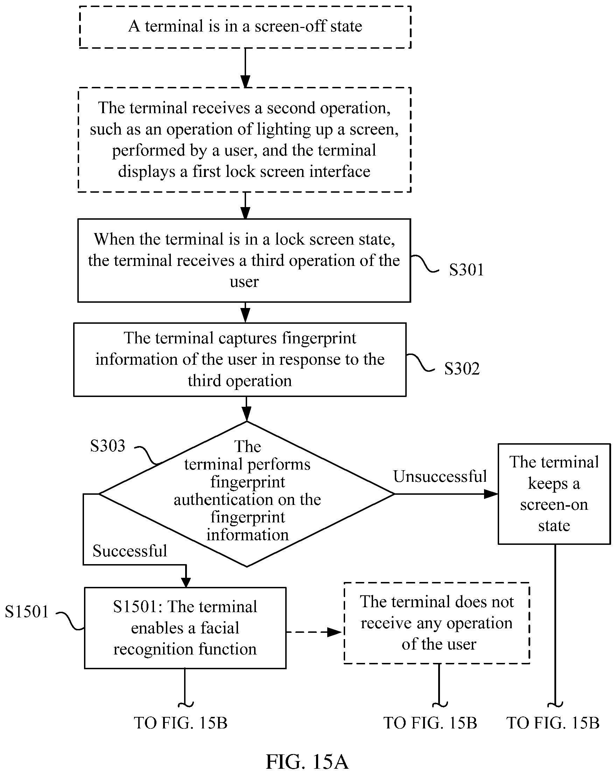

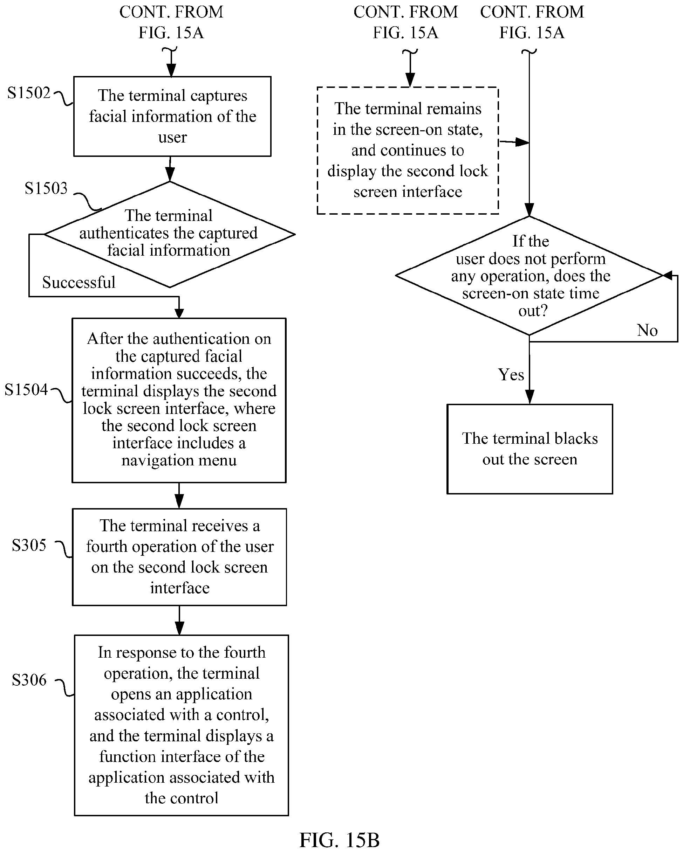

FIG. 15A and FIG. 15B are a schematic flowchart of a display method according to some other embodiments of this application;

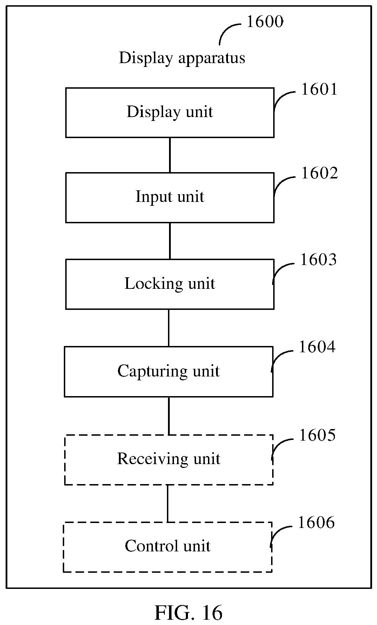

FIG. 16 is a possible schematic structural diagram of a display apparatus according to an embodiment of this application;

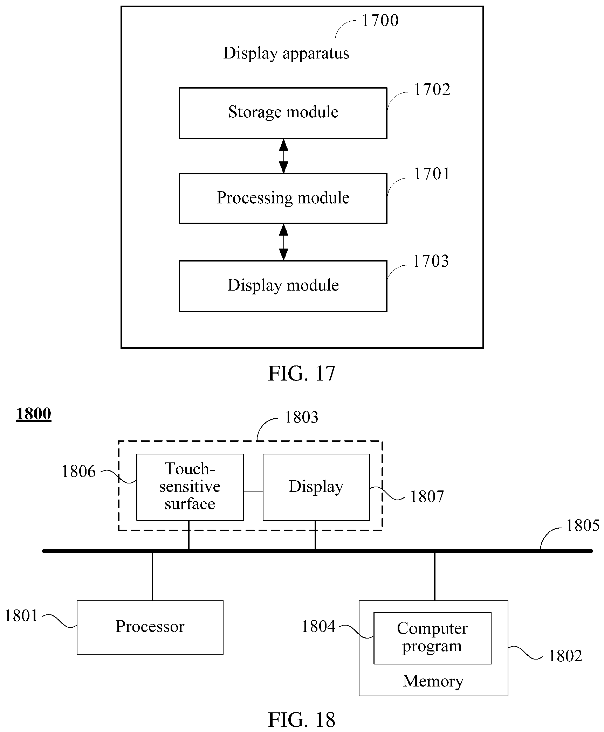

FIG. 17 is another possible schematic structural diagram of a display apparatus according to an embodiment of this application; and
FIG. 18 is a schematic structural diagram of a terminal according to an embodiment of this application.

### description of embodiments

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the descriptions of the embodiments of this application, unless otherwise stated, "a plurality of" means two or more than two.

Embodiments of this application provide a display method, and the method may be applied to a terminal. According to the method provided in the embodiments of this application, lock screen interfaces of the terminal can be enriched.

In addition, it is considered that, currently, in a process in which a user uses the terminal such as a mobile phone, if the user wants to open an application, when the mobile phone is in a lock screen state, the user needs to unlock the mobile phone first, then finds an icon of the application on a desktop of the mobile phone, and finally, the mobile phone opens the application only after the user performs a click operation on the icon of the application. If the user wants to open a function of the application, such as a payment and receipt function of WeChat, the user needs to perform more operations. The embodiments of this application further provide a method for quickly opening an application or an application function, and the method may be applied to the terminal. According to the method provided in the embodiments of this application, the user can open an application, a function of the application, a folder, or other terminal functions without performing a series of operations. In this way, complexity of the operation of the user is reduced, use efficiency of the terminal is improved, and efficient interaction between the terminal and the user is implemented.

It should be noted that the terminal in the embodiments of this application may be a device such as a mobile phone, a tablet computer, a desktop computer, a laptop computer, a handheld computer, a notebook computer, an ultra-mobile personal computer (Ultra-mobile Personal Computer, UMPC), a netbook, a cellular phone, or a personal digital assistant (Personal Digital Assistant, PDA). A specific manner of the device is not specifically limited in the embodiments of this application.

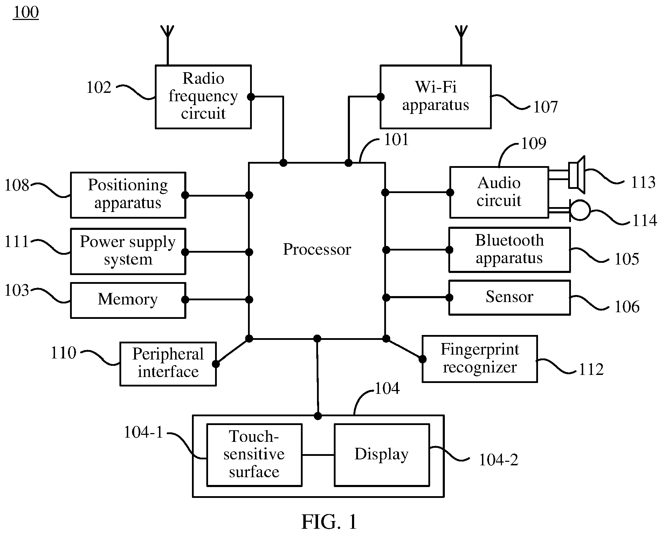

Referring to FIG. 1, an example in which the terminal is a mobile phone 100 is used in an embodiment of this application to describe the terminal provided in the embodiments of this application. A person skilled in the art may understand that the mobile phone 100 shown in FIG. 1 is merely an example, and does not constitute a limitation to the mobile phone 100, and the mobile phone 100 may include more components or fewer components than those shown in the figure, or two or more components may be combined, or a different component deployment may be used. The components shown in FIG. 1 may be implemented by using hardware that includes one or more signal processing and/or application-specific integrated circuits, software, or a combination of hardware and software.

As shown in FIG. 1, the mobile phone 100 may specifically include components such as a processor 101, a radio frequency (Radio Frequency, RF) circuit 102, a memory 103, a touchscreen 104, a Bluetooth apparatus 105, one or more sensors 106, a wireless fidelity (Wireless Fidelity, Wi-Fi) apparatus 107, a positioning apparatus 108, an audio circuit 109, a peripheral interface 110, a power supply system 111, and a fingerprint recognizer 112. These components may communicate with each other by using one or more communication buses or signal cables (not shown in FIG. 1).

The components of the mobile phone 100 are specifically described below with reference to FIG. 1.

The processor 101 is a control center of the mobile phone 100, and is connected to various parts of the mobile phone 100 by using various interfaces and lines. By running or executing an application (Application, App) stored in the memory 103, and invoking data and an instruction that are stored in the memory 103, the processor 101 performs various functions and data processing of the mobile phone 100. In some embodiments, the processor 101 may include one or more processing units; and the processor 101 may further integrate an application processor and a modem processor. The application processor mainly processes an operating system, a user interface, an application program, and the like. The modem processor mainly processes wireless communication. It may be understood that the foregoing modem processor may alternatively not be integrated into the processor 101. For example, the processor 101 may be a Kirin 960 chip manufactured by Huawei Technologies Co., Ltd.

The radio frequency circuit 102 may be configured to send and receive a radio signal during an information sending and receiving process or a call process. Specifically, after receiving downlink data from a base station, the radio frequency circuit 102 may deliver the downlink data to the processor 101 for processing. In addition, the radio frequency circuit 102 sends related uplink data to the base station. Usually, the radio frequency circuit 102 includes, but is not limited to, an antenna, at least one amplifier, a transceiver, a coupler, a low noise amplifier, a duplexer, and the like. In addition, the radio frequency circuit 102 may further communicate with another device through wireless communication. The wireless communication may use any communications standard or protocol, including, but is not limited to, global system for mobile communications, general packet radio service, code division multiple access, wideband code division multiple access, long term evolution, email, short messaging service, and the like.

The memory 103 is configured to store the application and the data. The processor 101 runs the application and the data that are stored in the memory 103, to implement various functions and data processing of the mobile phone 100. The memory 103 mainly includes a program storage area and a data storage area. The program storage area may store an operating system and an application program required by at least one function (such as a sound playing function and an image display function). The data storage area may store data (such as audio data and an address book) created based on use of the mobile phone 100. In addition, the memory 103 may include a highspeed random access memory, and may further include a non-volatile memory such as a magnetic disk storage device, a flash memory device, another volatile solid storage device, or the like. The memory 103 may store various operating systems, for example, an iOS^{®} operating system developed by Apple Inc. and an ANDROID^{®} operating system developed by Google Inc.

The touchscreen 104 may include a touch-sensitive surface 104-1 and a display 104-2. The touch-sensitive surface 104-1 (such as a touch panel) may collect a touch event of a user of the mobile phone 100 on or near the touch-sensitive surface 104-1 (for example, an operation of the user on or near the touch-sensitive surface 104-1 by using any suitable object such as a finger or a stylus), and send captured touch information to another component such as the processor 101. The touch event of the user near the touch-sensitive surface 104-1 may be referred to as floating touch. The floating touch may mean that to perform an expected function, the user only needs to be located near the terminal without directly contacting the touch panel for selecting, moving, or dragging a target (such as an icon). In an application scenario of the floating touch, terms "touch", "contact", and the like indicate contact near or close to the touchscreen without implying directly contacting the touchscreen. The touch-sensitive surface 104-1 that can implement the floating touch may be a capacitive, infrared light sensitive, or ultrasonic wave type touch-sensitive surface, or the like. The touch-sensitive surface 104-1 may include two parts: a touch detection apparatus and a touch controller. The touch detection apparatus detects a touch position of the user, detects a signal generated by the touch operation, and transfers the signal to the touch controller. The touch controller receives touch information from the touch detection apparatus, converts the touch information into touch point coordinates, and sends the touch point coordinates to the processor 101. The touch controller can further receive and execute an instruction sent by the processor 101. In addition, the touch-sensitive surface 104-1 may be a resistive, capacitive, infrared, or surface sound wave type touch-sensitive surface, or the like. The display (which may also be referred to as a display screen) 104-2 may be configured to display information entered by the user or information provided to the user, and various menus of the mobile phone 100. The display 104-2 may be configured by using a liquid crystal display, an organic light-emitting diode, or the like. The touch-sensitive surface 104-1 may cover the display 104-2. After detecting a touch event on or near the touch-sensitive surface 104-1, the touch-sensitive surface 104-1 transfers the touch event to the processor 101, to determine a type of the touch event. Then, the processor 101 may provide a corresponding visual output on the display 104-2 based on the type of the touch event. Although, in FIG. 1, the touch-sensitive surface 104-1 and the display screen 104-2 are used as two separate components to implement input and output functions of the mobile phone 100, in some embodiments, the touch-sensitive surface 104-1 and the display screen 104-2 may be integrated to implement the input and output functions of the mobile phone 100. It may be understood that the touchscreen 104 is formed by stacking a plurality of layers of materials. Only the touch-sensitive surface (layer) and the display screen (layer) are shown in the embodiments of this application, and other layers are not recorded in the embodiments of this application. In addition, in some other embodiments of this application, the touch-sensitive surface 104-1 may cover the display 104-2, and a size of the touch-sensitive surface 104-1 is larger than a size of the display screen 104-2, so that the display screen 104-2 is completely covered under the touch-sensitive surface 104-1, or the touch-sensitive surface 104-1 may be disposed on a front surface of the mobile phone 100 in a full-panel form, to be specific, touch of the user on the front surface of the mobile phone 100 can be sensed by the mobile phone 100. Therefore, full touch experience on the front surface of the mobile phone 100 can be implemented. In some other embodiments, the touch-sensitive surface 104-1 is disposed on the front surface of the mobile phone 100 in the full-panel form, and the display screen 104-2 may also be disposed on the front surface of the mobile phone 100 in the full-panel form. Therefore, a frame-less structure can be implemented on the front surface of the mobile phone 100.

The mobile phone 100 may further include the Bluetooth apparatus 105, configured to exchange data between the mobile phone 100 and another short-distance terminal (such as a mobile phone or a smartwatch). The Bluetooth apparatus in the embodiments of this application may be an integrated circuit, a Bluetooth chip, or the like.

The mobile phone 100 may further include at least one sensor 106, such as an optical sensor, a motion sensor, and another sensor. Specifically, the optical sensor may include an ambient light sensor and a proximity sensor. The ambient light sensor may adjust brightness of the display of the touchscreen 104 based on brightness of ambient light, and the proximity sensor may turn off a power supply of the display when the mobile phone 100 is moved to an ear. As one type of motion sensor, an acceleration sensor may detect magnitudes of accelerations in various directions (usually on three axes), may detect a magnitude and a direction of the gravity when static, and may be applied to an application that recognizes an attitude of the mobile phone 100 (for example, switching between landscape orientation and portrait orientation, a related game, and magnetometer attitude calibration), a function related to vibration recognition (such as a pedometer and a knock), and the like. Other sensors such as a gyroscope, a barometer, a hygrometer, a thermometer, and an infrared sensor may further be configured in the mobile phone 100, and details are not described herein.

In various embodiments of this application, the mobile phone 100 may further have a fingerprint recognition function. For example, the fingerprint recognizer 112 may be disposed on a back surface of the mobile phone 100 (for example, below a rear-facing camera), or the fingerprint recognizer 112 may be disposed on the front surface of the mobile phone 100 (for example, below the touchscreen 104, and for another example, on a home screen button of the mobile phone 100). In addition, the fingerprint recognition function may alternatively be implemented by configuring the fingerprint recognizer 112 in the touchscreen 104, to be specific, the fingerprint recognition function of the mobile phone 100 may be implemented by integrating the fingerprint recognizer 112 and the touchscreen 104 together. In this case, the fingerprint recognizer 112 may be disposed in the touchscreen 104, or may be a part of the touchscreen 104, or may be disposed in the touchscreen 104 in another manner. In addition, the fingerprint recognizer 112 may alternatively be implemented as a full-panel fingerprint recognizer. Therefore, the touchscreen 104 may be considered as a panel on which fingerprint capturing can be performed at any location. In some embodiments, the fingerprint recognizer 112 may process a captured fingerprint. For example, the fingerprint recognizer 112 may perform processing such as fingerprint authentication on the captured fingerprint. The fingerprint recognizer 112 may further send a processing result of the fingerprint authentication (for example, whether the fingerprint authentication succeeds) to the processor 101, so that the processor 101 makes a corresponding response based on the received fingerprint authentication result. In some other embodiments, the fingerprint recognizer 112 may alternatively send a captured fingerprint to the processor 101, so that the processor 101 processes the fingerprint (for example, fingerprint authentication). A main component of the fingerprint recognizer 112 in the embodiments of this application is a fingerprint sensor. Any type of sensing technology can be used in the fingerprint recognizer, and the technology includes but is not limited to an optical, capacitive, piezoelectric, ultrasonic wave sensing technology, or the like.

The Wi-Fi apparatus 107 is configured to provide network access complying with Wi-Fi related standard protocol to the mobile phone 100. The mobile phone 100 may access a Wi-Fi access point by using the Wi-Fi apparatus 107, to help the user to send and receive emails, browse a web page, access streaming media, and so on, which provides wireless broadband Internet access to the user. In some other embodiments, the Wi-Fi apparatus 107 may alternatively be used as a Wi-Fi wireless access point, and may provide Wi-Fi network access to another terminal.

The positioning apparatus 108 is configured to provide a geographical location to the mobile phone 100. It may be understood that the positioning apparatus 108 may be specifically a receiver of a positioning system such as a global positioning system (Global Positioning System, GPS) or a Beidou navigation satellite system. After receiving the geographical location sent by the foregoing positioning system, the positioning apparatus 108 sends the information to the processor 101 for processing, or sends the information to the memory 103 for storage. In some other embodiments, the positioning apparatus 108 may be a receiver of an assisted global positioning system (Assisted Global Positioning System, AGPS). The AGPS is an operation mode for performing GPS positioning with auxiliary cooperation. The AGPS may enable, by using a signal of a base station and a GPS satellite signal, the mobile phone 100 to position faster. In the AGPS system, the positioning apparatus 108 may obtain positioning assistance by communicating with an auxiliary positioning server (for example, a positioning server of the mobile phone 100). The AGPS system, served as an auxiliary server, assists the positioning apparatus 108 to implement ranging and positioning services. In this case, the auxiliary positioning server provides positioning assistance by communicating with the positioning apparatus 108 (namely, the GPS receiver) of the terminal such as the mobile phone 100 by using a wireless communications network.

The audio circuit 109, a speaker 113, and a microphone 114 may provide audio interfaces between the user and the mobile phone 100. The audio circuit 109 may convert received audio data into an electrical signal and transmit the electrical signal to the speaker 114. The speaker 113 converts the electrical signal into a sound signal for output. In addition, the microphone 114 converts a collected sound signal into an electrical signal. The audio circuit 109 receives the electrical signal, converts the electrical signal into audio data, and then outputs the audio data to the RF circuit 102 to send the audio data to, for example, another mobile phone, or outputs the audio data to the memory 103 for further processing.

The peripheral interface 110 is configured to provide various interfaces to external input/output devices (such as a keyboard, a mouse, an external display, an external memory, and a subscriber identity module). For example, the peripheral interface 110 is connected to a mouse by using a universal serial bus interface, and the peripheral interface 110 is connected to a subscriber identity module (Subscriber Identity Module, SIM) card provided by a telecommunications operator. The peripheral interface 110 may be configured to couple the external input/output peripheral devices to the processor 101 and the memory 103.

The mobile phone 100 may further include the power supply apparatus 111 (such as a battery and a power management chip) for supplying power to the components. The battery may be logically connected to the processor 101 by using the power management chip, thereby implementing functions such as charging, discharging, and power consumption management by using the power supply apparatus 111.

Although not shown in FIG. 1, the mobile phone 100 may further include a camera (a front-facing camera and/or a rear-facing camera), a flash, a micro projection apparatus, a near field communication (Near Field Communication, NFC) apparatus, and the like, and details are not described herein.

For example, an ANDROID@ operating system may be stored in the memory 103 of the mobile phone 100. The operating system is a Linux-based mobile device operating system, and implements various functions by combining the foregoing hardware in the mobile phone 100. A software architecture of the stored ANDROID@ operating system is described below in detail. It should be noted that in the embodiments of this application, the ANDROID@ operating system is merely used as an example for describing a software environment required by the terminal to implement the technical solutions of the embodiments, and a person skilled in the art may understand that the embodiments of this application may alternatively be implemented by using another operating system.

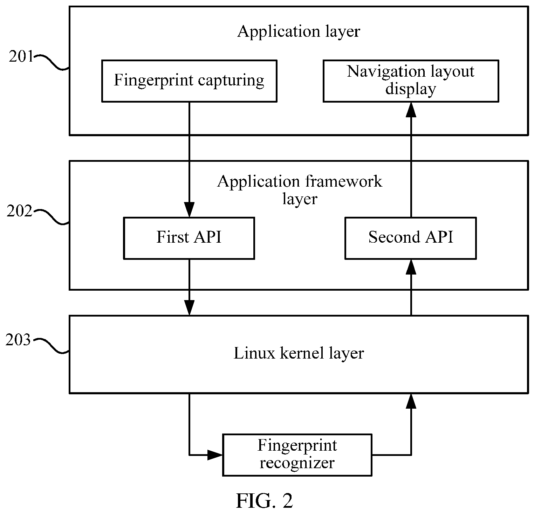

For example, FIG. 2 is a schematic architectural diagram of software of an ANDROID@ operating system that can be run on the foregoing terminal. The software architecture may be divided into three layers, which are respectively an application layer 201, an application framework layer 202, and a Linux kernel layer 203.

The application (Applications) layer 201 is a topmost layer of the operating system, and includes a native application of the operating system, for example, an email client, SMS messages, calls, a calendar, a browser, or contacts. Certainly, a developer may author an application and install the application on the layer. Usually, an application is developed by using Java language, and the development is implemented by invoking an application programming interface (application programming interface, API) provided by the application framework layer 202. In some embodiments of this application, the application layer 201 may be responsible for capturing fingerprint information of a user. The application layer 201 may further responsible for invoking a corresponding interface provided by the application framework layer 202, to display a navigation menu. The navigation menu may include one or more of the following controls: an icon of an application, an identifier of a function of the application, an icon of a folder, an identifier of a notification message, an unlock icon, and the like. The user can quickly open an application associated with the control by operating the control in the navigation menu. A function interface of the application associated with the control may further be displayed. For example, the user can open the application associated with the icon of the application by operating the icon of the application in the navigation menu. The terminal may further display a function interface of the application associated with the icon of the application, for example, a main interface of the application. For another example, the user operates the unlock icon in the navigation menu, so that the terminal can display a home screen or an interface displayed before the terminal is locked.

The application framework (Application Framework) layer 202 mainly provides, to a developer, various APIs used for accessing an application. The developer may develop an application of the developer by interacting with a bottom layer (for example, a Linux kernel) of the operating system by using an application framework. The application framework is mainly a series of service and management systems of the Android operating system. In some embodiments of this application, the application framework layer 202 may provide, to the application layer 201, a first API configured to transmit the captured fingerprint information to the bottom layer. The application framework layer 202 may further provide, to the application layer 201, a second API configured to display the navigation menu.

The Linux kernel (Linux Kernel) layer 203 provides core system services of the operating system. For example, security, memory management, process management, a network protocol stack, and a driver model are all based on a Linux kernel. The Linux kernel is also used as an abstraction layer between hardware and software stacks. In some embodiments of this application, the Linux kernel layer 203 may be configured to transfer, to the fingerprint recognizer of the terminal, the received fingerprint information that is transmitted by the upper layer, so that the fingerprint recognizer authenticates the captured fingerprint information. The Linux kernel layer 203 may further be configured to transfer, to the application layer 201 by using the application framework layer 202, an authentication result returned by the fingerprint recognizer. The application layer 201 may invoke a corresponding interface based on the authentication result returned by the bottom layer, to display corresponding content.

All of the technical solutions in the following embodiments may be implemented in a terminal (such as the mobile phone 100) having the foregoing hardware architecture and software architecture.

Currently, users pay more attention to protection on personal privacy, and with rapid development of science and technology, as a biometric feature-based identity authentication technology, a fingerprint recognition technology has basically become a standard technology of the terminal. In the embodiments of this application, in consideration of protection on personal privacy of users, in this application, the technical solutions provided in this application are described in detail by mainly using a terminal having a fingerprint recognition function as an example.

In some embodiments of this application, the terminal has the fingerprint recognition function. Specifically, the fingerprint recognizer may be configured in the touchscreen of the terminal to implement the fingerprint recognition function. For example, the fingerprint recognizer may be installed below the touchscreen of the terminal to implement the fingerprint recognition function. In some other embodiments of this application, the fingerprint recognition function may alternatively be implemented by controlling the touchscreen of the terminal by using a logical circuit. In some other embodiments of this application, the fingerprint recognition function may alternatively be implemented by installing the fingerprint recognizer on the back surface or the home screen button of the terminal. This is not specifically limited in the embodiments of this application.

The method for quickly opening an application or an application function that is provided in the embodiments of this application is described below in detail with reference to the accompanying drawings and application scenarios.

In some embodiments of this application, the terminal may quickly open an application or an application function by displaying a navigation menu. The navigation menu may include one or more of the following controls: an icon of an application, an identifier of a function of the application, an icon of a folder, an identifier of a notification message, an unlock icon, and the like. The folder may be a folder that is on the home screen of the terminal and that includes icons of a plurality of applications. In this way, when a user operates the icon of the folder, the terminal may open the folder including the icons of the plurality of applications. The function of the application may be a payment and receipt function of WeChat, a new friend adding function of WeChat, a shopping cart function of Taobao, or the like. When the user operates the unlock icon, the terminal may display the home screen or an interface displayed before the terminal is locked.

A first application scenario: It is assumed that the terminal is in a lock screen state. The navigation menu includes the icon of the application and the unlock icon. The navigation menu may be included in a second lock screen interface. The second lock screen interface is different from a first lock screen interface. The first lock screen interface may be an interface displayed in response to a received second operation of the user when the terminal is in the lock screen state. For example, the second operation may be an operation of lighting up a screen by the user. The user can quickly open the application by operating the icon of the application that is included in the navigation menu. Both the first lock screen interface and the second lock screen interface are interfaces displayed when the mobile phone is in the lock screen state after the terminal is locked. The navigation menu is displayed after fingerprint authentication for the user succeeds.

In addition, in some embodiments of this application, it is assumed that the fingerprint recognition function of the terminal is implemented by installing the fingerprint recognizer below the touchscreen of the terminal.

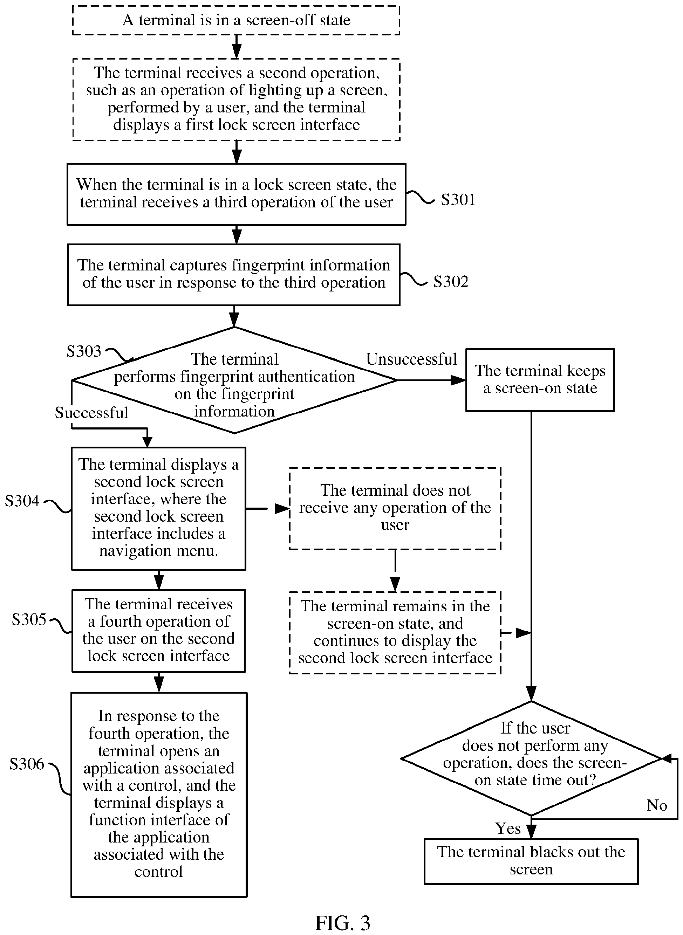

In the first application scenario, as shown in FIG. 3, the method in the embodiments of the present invention may include S301 to S306.

S301: When the terminal is in the lock screen state, the terminal receives a third operation of the user.

The third operation is used to trigger the fingerprint recognizer disposed below the touchscreen of the terminal to capture fingerprint information of the user. For example, the third operation may be a third operation, such as a click operation, performed by the user on the touchscreen of the terminal.

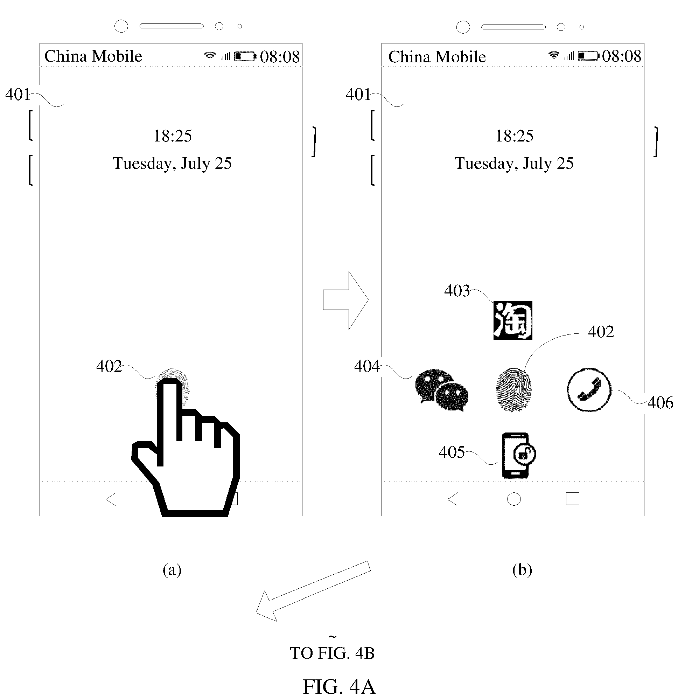

For example, in some embodiments of this application, when the terminal is in the lock screen state, if the terminal is in a screen-on state, as shown in (a) in FIG. 4A, an interface currently displayed by the terminal is a lock screen interface 401. The lock screen interface 401 may be the first lock screen interface in this application. The user may perform the third operation in a fingerprint capturing area on the touchscreen. The fingerprint capturing area may be a projection area of the fingerprint recognizer on the touchscreen. The user may enter the fingerprint information in the projection area. The fingerprint recognizer can detect the fingerprint information entered by the user in the projection area, to perform fingerprint authentication. The lock screen interface 401 may include a fingerprint pattern 402, used to indicate a location of the fingerprint capturing area on the touchscreen. A location of the fingerprint pattern 402 is associated with the fingerprint recognizer. The user may perform the third operation at the location at which the fingerprint pattern 402 is displayed. It should be noted that in a scenario in which the fingerprint recognition function is implemented by installing the fingerprint recognizer below the touchscreen of the terminal, a location of the fingerprint recognizer installed below the touchscreen is usually fixed. When the location of the fingerprint recognizer installed below the touchscreen is fixed, a location of the fingerprint capturing area on the touchscreen is also fixed. Therefore, the lock screen interface 401 may alternatively not include the fingerprint pattern 402.

In some other embodiments of this application, if the terminal is in a screen-off state, before S301, the terminal may receive the second operation, such as the operation of lighting up the screen, performed by the user. For example, the operation of lighting up the screen may be a press operation performed by the user on a power supply button. For another example, the operation of lighting up the screen may alternatively be a click operation performed by the user on the touchscreen. The operation of lighting up the screen may alternatively be a double-click operation performed by the user on the touchscreen. The operation of lighting up the screen is not specifically limited in the embodiments of this application. In response to the operation of lighting up the screen, the terminal may light up the touchscreen, and displays the lock screen interface 401 on the touchscreen. In addition, if the terminal is in the screen-off state, when the terminal receives a notification message, the terminal may also light up the touchscreen, and displays the lock screen interface 401 on the touchscreen.

In some other embodiments of this application, if the terminal is in the screen-off state, the terminal may display the fingerprint pattern on the touchscreen in the screen-off state. The location of the fingerprint pattern is associated with the fingerprint recognizer. The user may perform the third operation at the location at which the fingerprint pattern is displayed in the screen-off state.

In some other embodiments of this application, before the terminal is locked, the terminal may display the home screen. In this case, the user may perform a first operation. For example, the first operation may be a press operation performed by the user on the power supply button. The terminal is locked in response to the first operation. In addition, after the terminal displays the home screen, the terminal may determine whether the operation performed by the user is received. If the terminal receives no operation performed by the user, the terminal may remain in the screen-on state. The terminal may continue to display the home screen. The terminal may further determine whether the user performs an operation in a process in which the terminal remains in the screen-on state. If the user does not perform any operation, when the screen-on state times out, the terminal is locked. The terminal may further black out the screen.

S302: The terminal captures the fingerprint information of the user in response to the third operation.

In a process in which the user performs the third operation, a finger of the user touches the touchscreen of the terminal. When the finger of the user touches the touchscreen of the terminal, the fingerprint recognizer disposed below the touchscreen of the terminal may capture the fingerprint information of the user.

S303: The terminal performs the fingerprint authentication on the fingerprint information.

S304: If the fingerprint authentication succeeds, the terminal displays the second lock screen interface. The second lock screen interface includes the navigation menu.

After capturing the fingerprint information of the user, the terminal may compare the captured fingerprint information with prestored fingerprint information. If the captured fingerprint information matches the prestored fingerprint information, the fingerprint authentication succeeds. If the fingerprint authentication succeeds, the terminal may display the second lock screen interface. The second lock screen interface includes the navigation menu. For example, the terminal may display the navigation menu on the first lock screen interface. For example, as shown in (b) in FIG. 4A, the terminal displays a navigation menu on the lock screen interface 401. The navigation menu includes four controls, which are respectively a Taobao icon 403, a WeChat icon 404, an unlock icon 405, and a phone icon 406. In addition, if in S301, the user performs the third operation in the screen-off state, after the fingerprint authentication succeeds, the terminal may light up the touchscreen and directly display the second lock screen interface, and the second lock screen interface includes the navigation menu.

In some embodiments of this application, after the fingerprint authentication succeeds, the terminal may further change a display effect of the fingerprint pattern 402, to inform the user that the fingerprint authentication succeeds. For example, the fingerprint pattern 402 is changed from gray into another color such as red. For another example, before the fingerprint authentication, the fingerprint pattern 402 is statically displayed. After the fingerprint authentication succeeds, the fingerprint pattern 402 is dynamically displayed by using a flashing effect, an animation effect, or the like. For another example, brightness, contrast, grayscale, or the like of the fingerprint pattern 402 is changed. This is not specifically limited in the embodiments of this application.

In some other embodiments of this application, after the fingerprint authentication performed by the terminal for the user succeeds, the terminal may first determine whether there is an unread notification message, and if there is an unread notification message, after the fingerprint authentication, the terminal displays the second lock screen interface. If there is no unread notification message, in response to the successful authentication on the captured fingerprint information, the terminal displays the home screen or an interface displayed before the terminal is locked.

If the captured fingerprint information does not match the prestored fingerprint information, the fingerprint authentication is unsuccessful. If the fingerprint authentication is unsuccessful, the terminal may remain in the screen-on state. The terminal may further determine whether the user performs an operation in a process in which the terminal remains in the screen-on state. If the user does not perform any operation, when the screen-on state times out, the terminal blacks out the screen. In some embodiments, when the fingerprint authentication is unsuccessful, the terminal may alternatively vibrate or display prompt information, to inform the user that the fingerprint authentication is unsuccessful. In some embodiments of this application, when the fingerprint authentication is unsuccessful, the terminal may alternatively automatically switch the fingerprint authentication to another authentication manner. For example, when the fingerprint authentication is unsuccessful, the terminal automatically switches the fingerprint authentication to password authentication, and displays a password login interface, to guide the user to enter a password. Alternatively, when the fingerprint authentication is unsuccessful, the user may alternatively manually switch the fingerprint authentication to another authentication manner. When authentication in the another authentication manner succeeds, the terminal may also display the second lock screen interface. For example, the navigation menu is displayed on the first lock screen interface. For example, the terminal receives a login password entered by the user on the password login interface, and after the login password authentication succeeds, the terminal displays the second lock screen interface. The second lock screen interface includes the navigation menu.

S305: The terminal receives a fourth operation of the user on the second lock screen interface.

The fourth operation may be a click operation on any control included in the navigation menu. The fourth operation may alternatively be a slide operation. A termination point of the slide operation is any control included in the navigation menu. Alternatively, a start point of the slide operation is any control included in the navigation menu.

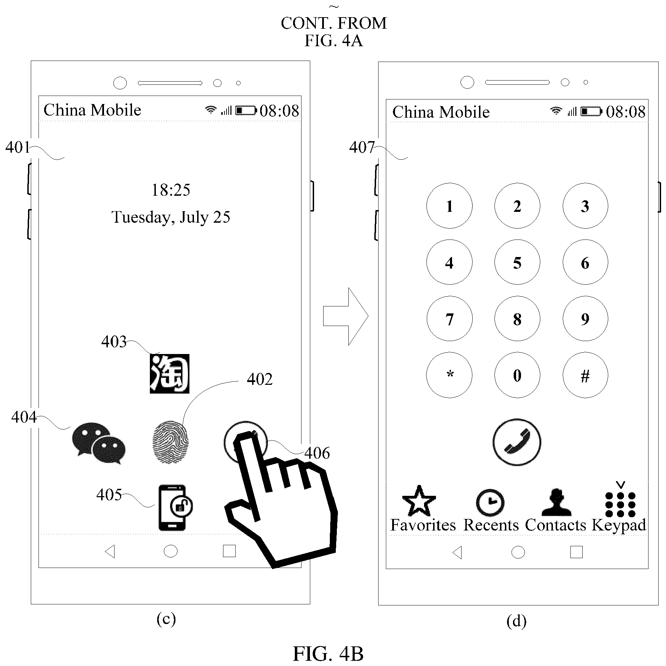

For example, if the user wants to use a dialing function of the terminal, the user may perform the fourth operation, to be specific, click the phone icon 406, as shown in (c) in FIG. 4B.

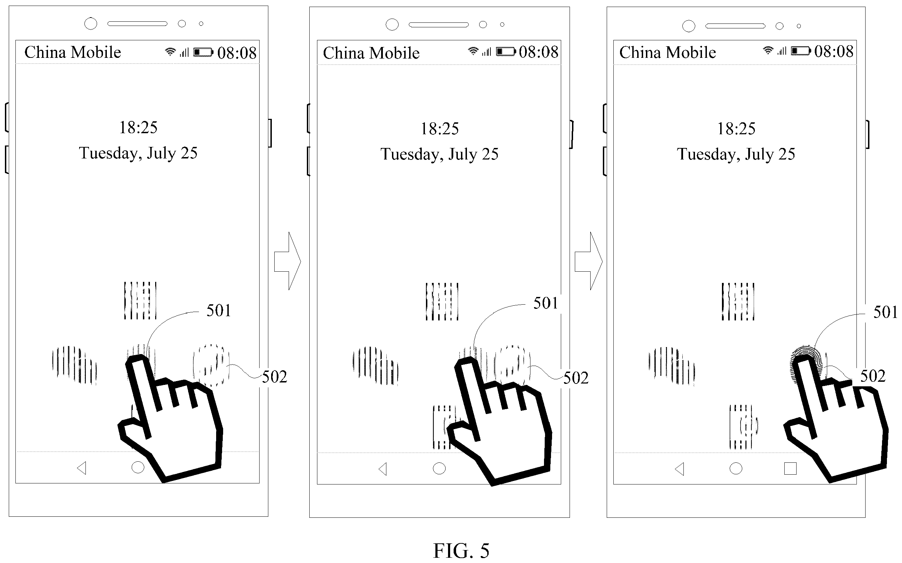

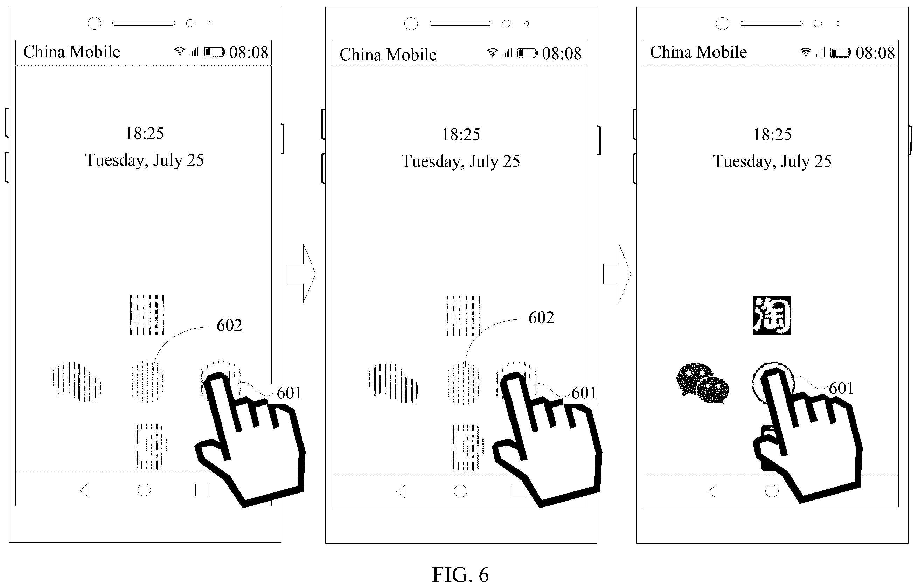

In some embodiments of this application, if the fourth operation is the slide operation, in a process in which the user performs the slide operation, as the finger of the user moves, the terminal moves a control corresponding to a location of the start point of the slide operation. For example, the termination point of the slide operation is any control, such as the phone icon, included in the navigation menu. It is assumed that the start point of the slide operation is the fingerprint capturing area. As shown in FIG. 5, in a process in which the user performs the slide operation, a fingerprint icon 501 corresponding to the fingerprint capturing area is moved with movement of the finger of the user. When the finger of the user stays at a location of a phone icon 502, movement of the fingerprint pattern 501 is also stopped and remains at the location of the phone icon 502. In this way, a visual effect provided to the user is that the fingerprint pattern 501 is dragged to the location of the phone icon 502. For example, the start point of the slide operation is any control, such as a phone icon, included in the navigation menu. It is assumed that the termination point of the slide operation is the fingerprint capturing area. As shown in FIG. 6, in a process in which the user performs the slide operation, a phone icon 601 is moved with movement of the finger of the user. When the finger of the user stays at a location of a fingerprint icon 602 corresponding to the fingerprint capturing area, movement of the phone icon 601 is also stopped, and remains at the location of the fingerprint icon 602. In this way, a visual effect provided to the user is that the phone icon 601 is dragged to the location of the fingerprint pattern 602. In some embodiments of this application, when the fourth operation is the slide operation, the terminal may alternatively not move the control corresponding to the location of the start point of the slide operation with the movement of finger of the user. This is not limited in the embodiments of this application.

S306: In response to the fourth operation, the terminal opens an application associated with the control, and the terminal displays a function interface of the application associated with the control.

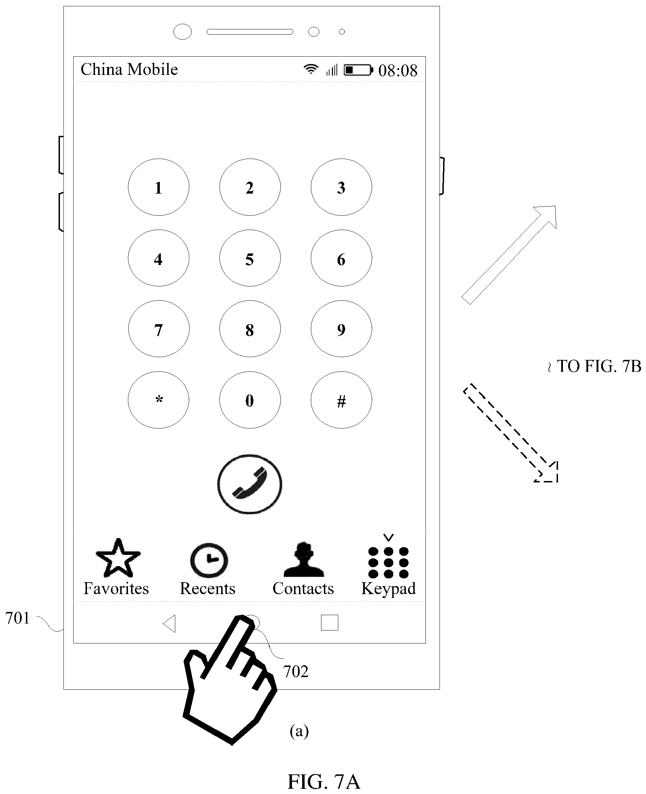

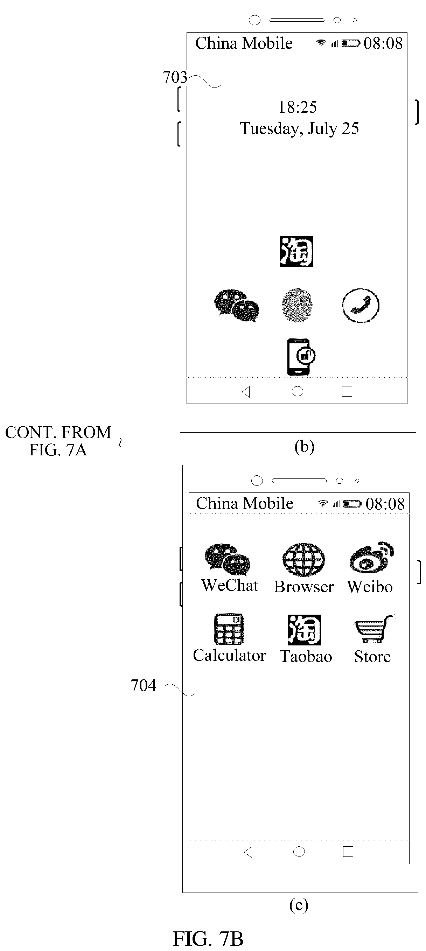

For example, with reference to the example in S305, in response to the click operation performed by the user on the phone icon 406, the terminal opens a phone application associated with the phone icon 406. As shown in (d) in FIG. 4B, the terminal displays a dialing function interface 407 of the phone application. In some embodiments, after the terminal opens the application associated with the control, and displays the function interface of the application associated with the control, the terminal may further receive an operation of exiting the current function interface by the user. For example, after the terminal opens the phone application and displays the dialing function interface of the phone application, as shown in (a) in FIG. 7A, the user clicks a home (Home) button 702 included in a navigation bar 701. In some embodiments, in response to the click operation, as shown in (b) in FIG. 7B, the terminal may display a lock screen interface 703. The lock screen interface 703 may include the navigation menu, or may not include the navigation menu. To be specific, the lock screen interface 703 may be the first lock screen interface, or may be the second lock screen interface. (b) in FIG. 7B is shown by using an example in which the navigation menu is included, to be specific, by using the second lock screen interface as an example. Alternatively, in some other embodiments, in response to the click operation, as shown in (c) in FIG. 7B, the terminal may display a home screen (home screen) 704. Alternatively, in response to the click operation, the terminal may display an interface displayed before the terminal is locked. For example, the interface displayed before the terminal is locked is a main interface of Weibo. The terminal displays the main interface of Weibo in response to the click operation.

In some other embodiments of this application, if the fourth operation performed by the user is for the unlock icon 405 included in the navigation menu, in response to the fourth operation, the terminal displays the home screen or an interface displayed before the terminal is locked. In some other embodiments of this application, if the terminal does not receive any operation of the user after the terminal displays the second lock screen interface, the terminal may remain in the screen-on state. The terminal may continue to display the current interface, namely, the second lock screen interface. The second lock screen interface includes the navigation menu. The terminal may further determine whether the user performs an operation in a process in which the terminal remains in the screen-on state. If the user does not perform any operation, when the screen-on state times out, the terminal blacks out the screen.

In some other embodiments of this application, the fingerprint recognition function of the terminal may alternatively be implemented by installing the fingerprint recognizer on the back surface or the home screen button of the terminal. The method in the embodiments of this application in this case is similar to the method shown in FIG. 3. However, there are the following two differences between the two methods.

Difference 1: the third operation in S301 is used to trigger the fingerprint recognizer disposed on the back surface or the home screen button of the terminal to capture the fingerprint information of the user. Using an example in which the fingerprint recognizer is installed on the home screen button of the terminal, when the terminal is in the screen-on state, the third operation may be a click operation performed by the user on the home screen button. When the terminal is in the screen-off state, the third operation may be a press operation or a click operation performed by the user on the home screen button.

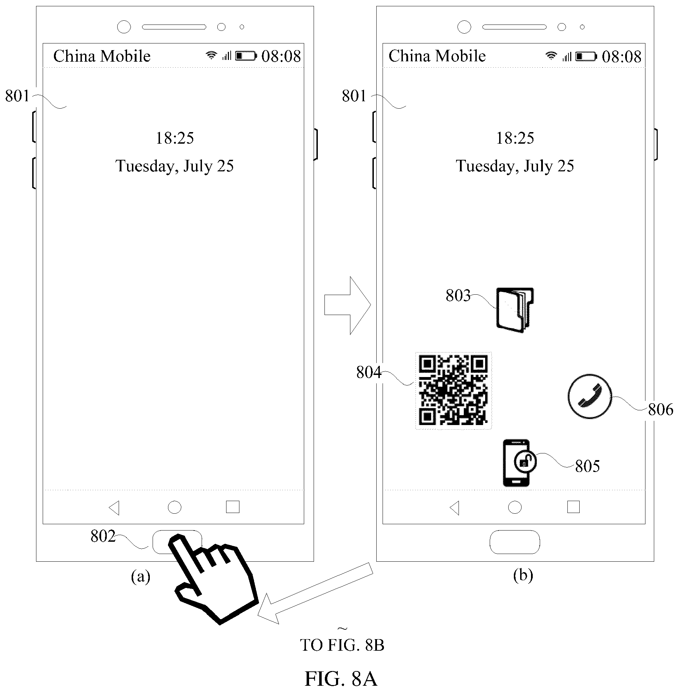

Using an example in which the navigation menu includes the icon of the folder, the identifier of the function of the application, and the unlock icon, and the identifier of the function of the application is the payment and receipt function of WeChat. When the terminal is in the lock screen state, if the terminal is in the screen-on state, as shown in (a) in FIG. 8A, an interface currently displayed by the terminal is a lock screen interface 801. The lock screen interface 801 may be the first lock screen interface in this application. The user can touch the home screen button 802. When the finger of the user touches the home screen button 802 of the terminal, the fingerprint recognizer disposed on the home screen button 802 may capture the fingerprint information of the user. After capturing the fingerprint information of the user, the terminal may compare the captured fingerprint information with the prestored fingerprint information. If the captured fingerprint information matches the prestored fingerprint information, the fingerprint authentication succeeds. If the fingerprint authentication succeeds, the terminal may display the second lock screen interface, as shown in (b) in FIG. 8A. For example, the terminal may display a navigation menu on the lock screen interface 801. For example, the navigation menu includes four controls, which are respectively an icon 803 of a folder, an identifier 804 of a payment and receipt function of WeChat, an unlock icon 805, and a phone icon 806.

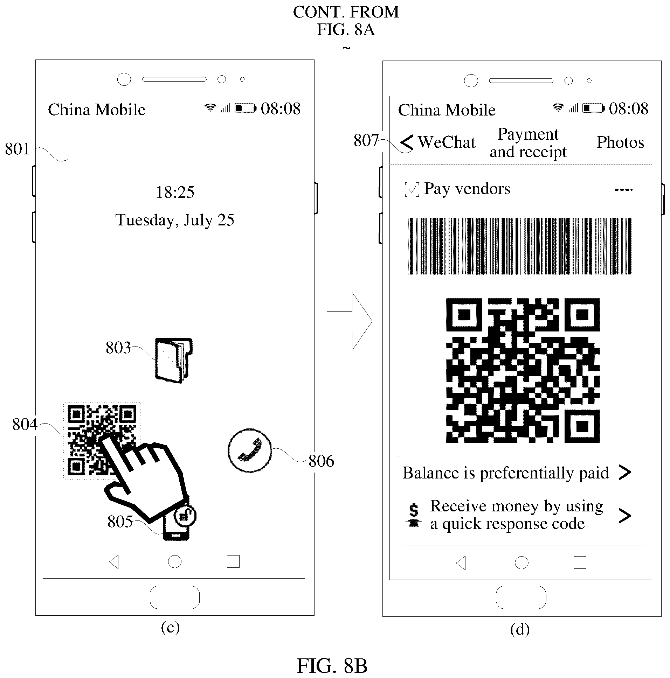

The identifier 804 of the payment and receipt function of WeChat may be a valid payment code of the payment and receipt function of WeChat, for example, a valid quick response code. The valid quick response code may be generated by the WeChat application. For example, after the fingerprint authentication succeeds, the terminal may open WeChat at a background. The terminal may generate the valid quick response code of the payment and receipt function of the WeChat application. After generating the valid quick response code, the terminal may display the generated valid quick response code on the lock screen interface 801 by using a screenshot or in another manner. The valid quick response code may be a dynamic quick response code. The valid quick response code may alternatively be a static quick response code. In this way, after the fingerprint authentication for the user succeeds, another user may implement payment and receipt by directly scanning, by using a terminal of the another user, the quick response code included in the navigation menu included in the second lock screen interface of the terminal. Alternatively, the identifier 804 of the payment and receipt function of WeChat may be an icon used to open the payment and receipt function of WeChat (an example in which the icon is a quick response code is used in FIG. 8A and FIG. 8B), instead of the valid quick response code of the payment and receipt function. In this way, after the fingerprint authentication for the user succeeds, the user may operate the icon of the payment and receipt function of WeChat that is included in the navigation menu. In response to the operation performed by the user on the icon of the payment and receipt function of WeChat, the terminal may open the payment and receipt function of WeChat that is associated with the icon of the payment and receipt function of WeChat. The terminal may display the valid quick response code on a payment and receipt function interface. In this case, another user may scan, by using a terminal of the another user, the valid quick response code displayed on the payment and receipt function interface, to implement payment and receipt.

Difference 2: The fourth operation in S305 may be a click operation on any control included in the navigation menu. For example, if the user wants to use the payment and receipt function of WeChat, and it is assumed that the identifier 804 of the payment and receipt function of WeChat is an icon of the payment and receipt function of WeChat. As shown in (c) in FIG. 8B, the user may click the identifier 804 of the payment and receipt function of WeChat. In response to the click operation performed by the user on the identifier 804 of the payment and receipt function of WeChat, the terminal opens the payment and receipt function of WeChat. As shown in (d) in FIG. 8B, the terminal displays the payment and receipt function interface 807 of WeChat. The payment and receipt function interface includes the valid quick response code of the payment and receipt function of WeChat.

For specific descriptions of other content, refer to descriptions of corresponding content in the embodiments shown in FIG. 3, and details are not described herein again one by one.

It should be noted that in some embodiments, when the fingerprint recognition function of the terminal is implemented by installing the fingerprint recognizer below the touchscreen of the terminal, if the navigation menu does not include the unlock icon, the terminal may determine, based on different operations performed by the user, whether the home screen or an interface displayed before the terminal is locked is displayed, or the second lock screen interface including the navigation menu is displayed, in response to the received operation.

An operation of triggering the terminal to display the second lock screen interface including the navigation menu may be the third operation, for example, the click operation performed by the user on the touchscreen. An operation of triggering the terminal to display the home screen or an interface displayed before the terminal is locked may be an operation different from the third operation, for example, a double-click operation performed by the user on the touchscreen, or a touch and hold operation performed by the user on the touchscreen.

For example, the terminal receives the third operation in S301. After the fingerprint authentication succeeds, in response to the third operation, the terminal displays the second lock screen interface including the navigation menu. The terminal receives a double-click operation performed by the user on the fingerprint capturing area of the touchscreen. After the fingerprint authentication succeeds, in response to the double-click operation, the terminal displays the home screen or an interface displayed before the terminal is locked.

Alternatively, when a same operation, such as the third operation (it is assumed that the third operation is a click operation on the touchscreen) is performed by the user, the terminal may alternatively determine, based on different duration in which the user touches the touchscreen of the terminal, whether the home screen or an interface displayed before the terminal is locked is displayed, or the second lock screen interface including the navigation menu is displayed, in response to the received operation.

For example, the terminal receives a click operation performed by the user, and duration in which the user touches the touchscreen of the terminal is first duration. After the fingerprint authentication succeeds, in response to the click operation, the terminal displays the second lock screen interface including the navigation menu. The terminal receives a click operation performed by the user, and duration in which the user touches the touchscreen of the terminal is second duration. After the fingerprint authentication succeeds, in response to the click operation, the terminal displays the home screen or an interface displayed before the terminal is locked.

Certainly, in the embodiments of this application, the third operation having the first duration may be referred to as a click operation, and the third operation having the second duration may be referred to as a touch and hold operation.

In some other embodiments, when the fingerprint recognition function of the terminal is implemented by installing the fingerprint recognizer on the back surface or the touchscreen button of the terminal, if the navigation menu does not include the unlock icon, the terminal may alternatively determine, based on different operations performed by the user, whether the home screen or an interface displayed before the terminal is locked is displayed, or the second lock screen interface including the navigation menu is displayed, in response to the received operation. Alternatively, when a same operation is performed by the user, the terminal may determine, based on different duration in which the user touches the back surface or the home screen button of the terminal, whether the home screen or an interface displayed before the terminal is locked is displayed, or the second lock screen interface including the navigation menu is displayed. Specific descriptions are similar to the descriptions of the specific implementation in which the fingerprint recognizer is installed below the touchscreen of the terminal, and details are not described herein again.

According to the method provided in the embodiments of this application, when the terminal is in the lock screen state, if the terminal receives the second operation, such as the operation of lighting up the screen, performed by the user, the terminal may display the first lock screen interface in response to the second operation. If the terminal receives the third operation of the user, for example, an operation of triggering the fingerprint recognizer configured in the touchscreen to capture the fingerprint information of the user, the terminal may capture the fingerprint information of the user, and display the second lock screen interface that is different from the first lock screen interface in response to the successful fingerprint authentication for the user. In addition, the terminal displays the second lock screen interface including the navigation menu, so that the user may directly operate the control included in the navigation menu on the lock screen interface. In response to the operation of the user, the terminal may directly open the function interface of the application associated with the control operated by the user. Complexity of the operation of the user is reduced, use efficiency of the terminal is improved, and efficient interaction between the terminal and the user is implemented.

A second application scenario: It is assumed that the terminal is in a lock screen state. Controls included in the navigation menu are the icon of the application, the identifier of the notification message, and the unlock icon. The navigation menu may be included in a second lock screen interface. The second lock screen interface is different from a first lock screen interface. The first lock screen interface may be an interface displayed in response to a received second operation of the user when the terminal is in the lock screen state. For example, the second operation may be an operation of lighting up the screen by the user. The user can quickly open an application associated with the control by operating the control included in the navigation menu. A function interface of the application associated with the control is displayed. The navigation menu is displayed when the terminal is in a screen-on state.

In addition, in some embodiments of this application, it is assumed that the fingerprint recognition function of the terminal is implemented by installing the fingerprint recognizer below the touchscreen of the terminal.

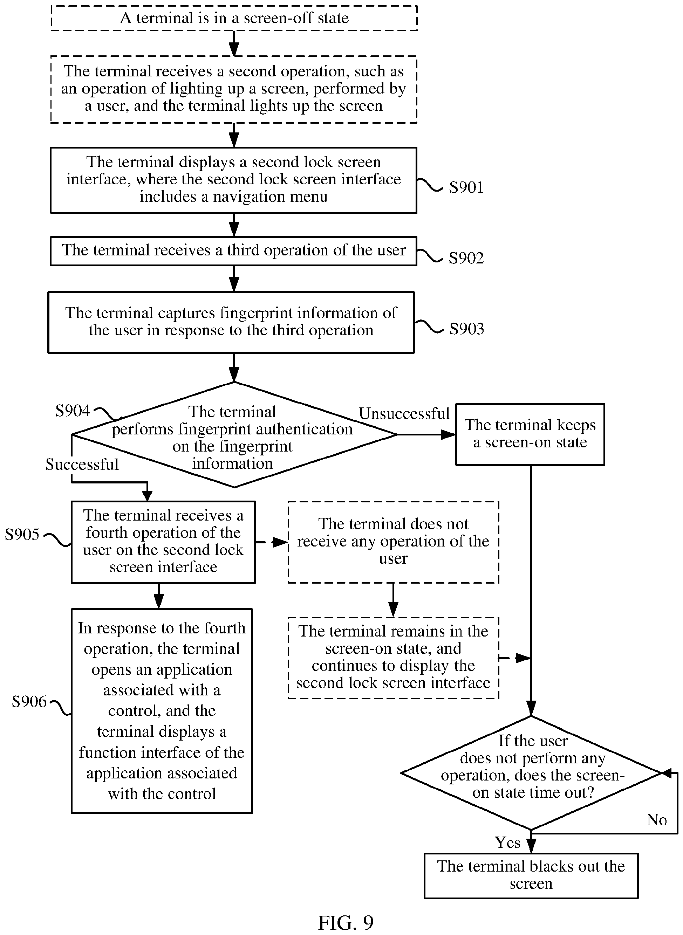

In the second application scenario, as shown in FIG. 9, the method in the embodiments of the present invention may include S901 to S906.

S901: The terminal displays the second lock screen interface, where the second lock screen interface includes the navigation menu.

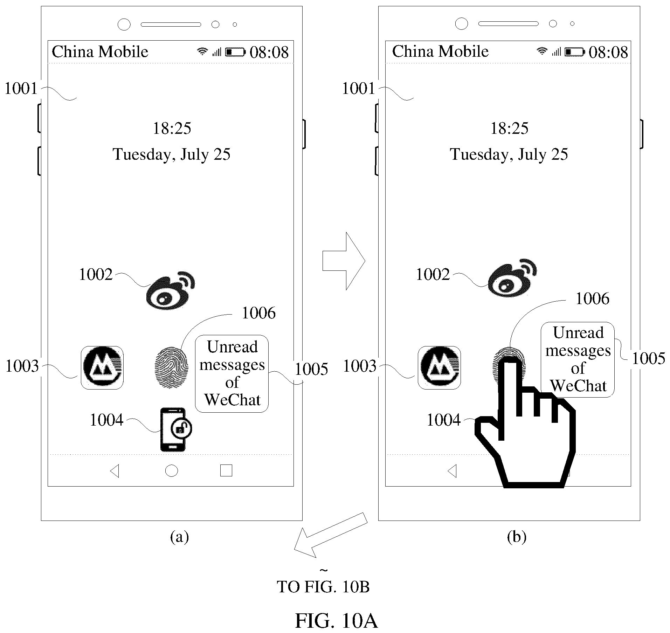

When the terminal is in the lock screen state, if the terminal is in the screen-on state, as shown in (a) in FIG. 10A, an interface currently displayed by the terminal is a lock screen interface 1001. The lock screen interface 1001 may be the second lock screen interface in this application. The lock screen interface 1001 includes a navigation menu. As shown in (a) in FIG. 10A, the navigation menu includes four controls, which are respectively a Weibo icon 1002, a China Merchants Bank Mobile Bank icon 1003, an unlock icon 1004, and an identifier 1005 of a notification message. In some embodiments, as shown in (a) in FIG. 10A, the lock screen interface 1001 may further include a fingerprint pattern 1006. For specific descriptions of the fingerprint pattern 1006, refer to the descriptions of the fingerprint pattern in the embodiments shown in FIG. 3 in this application, and details are not described in the embodiments of this application again.

In some other embodiments of this application, if the terminal is in the screen-off state, before S901, the terminal may receive the second operation, such as the operation of lighting up the screen, performed by the user.

S902: The terminal receives a third operation of the user.

The third operation is used to trigger the fingerprint recognizer disposed below the touchscreen of the terminal to capture fingerprint information of the user. The third operation may be a click operation performed by the user on the touchscreen of the terminal. For example, as shown in (b) in FIG. 10A, the user may perform the third operation on the fingerprint capturing area of the touchscreen.

S903: The terminal captures the fingerprint information of the user in response to the third operation.

S904: The terminal performs fingerprint authentication on the fingerprint information.

If the fingerprint authentication succeeds, in some embodiments of this application, the user may be informed, by changing a display effect of the control included in the navigation menu, that the fingerprint authentication for the user succeeds. For example, one or more of the four controls included in the navigation menu are changed from gray into another color, such as red. For another example, before the fingerprint authentication, the control included in the navigation menu is statically displayed. After the fingerprint authentication succeeds, one or more of the four controls included in the navigation menu are dynamically displayed by using a flashing effect, an animation effect, or the like. For another example, brightness, contrast, grayscale, or the like of one or more of the four controls included in the navigation menu are changed. This is not specifically limited in the embodiments of this application.

If the fingerprint authentication is unsuccessful, in some embodiments of this application, the terminal may vibrate or display prompt information, to inform the user that the fingerprint authentication is unsuccessful. Alternatively, when the fingerprint authentication is unsuccessful, the terminal displays the control included in the navigation menu by using a display effect different from the effect displayed when the fingerprint authentication succeeds. Alternatively, when the fingerprint authentication is unsuccessful, the control included in the navigation menu is in a non-operating state. For example, when the user clicks the control in the navigation menu, the terminal makes no response, or the terminal vibrates and makes no other response. For another example, the user cannot drag the control in the navigation menu.

S905: The terminal receives a fourth operation of the user on the second lock screen interface.

The fourth operation may be a click operation on any control included in the navigation menu. The fourth operation may alternatively be a slide operation. A termination point of the slide operation is any control included in the navigation menu. Alternatively, a start point of the slide operation is any control included in the navigation menu.

S906: If the fingerprint authentication succeeds, in response to the fourth operation, the terminal opens an application associated with the control, and the terminal displays a function interface of the application associated with the control.

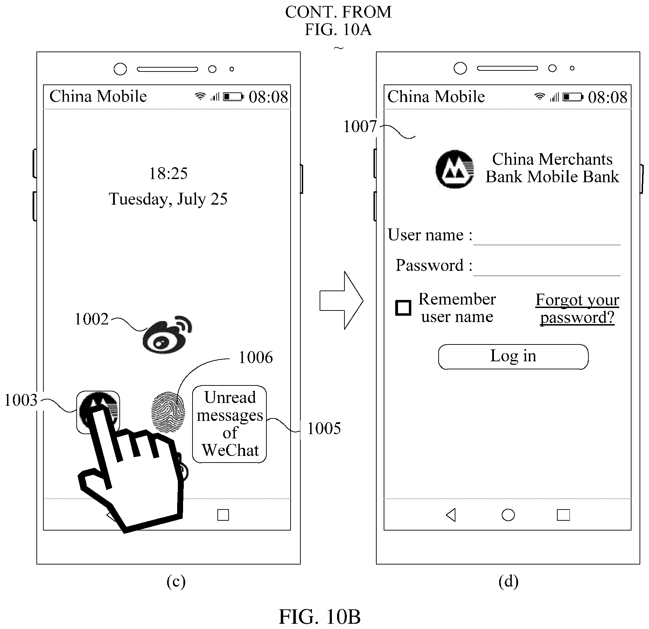

After the terminal receives the fourth operation, if the fingerprint authentication on the fingerprint information of the user in S904 succeeds, in response to the fourth operation, the terminal opens the application associated with the control. For example, as shown in (c) in FIG. 10B, the user performs a click operation on the China Merchants Bank Mobile Bank icon 1003 included in the navigation menu. If the fingerprint authentication performed by the terminal for the user succeeds, in response to the click operation, the terminal opens the China Merchants Bank Mobile Bank associated with the China Merchants Bank Mobile Bank icon 1003. As shown in (d) in FIG. 10B, the terminal displays a login interface 1007 of the China Merchants Bank Mobile Bank. The login interface 1007 may include a prompt window 1008 (as shown in (d) in FIG. 10B) used by the user to enter a user name and a password; and/or the login interface 1007 may include a prompt box (not shown) used to prompt the user to perform the fingerprint authentication, to prompt the user to perform the fingerprint authentication to log in to the application. In some other embodiments of this application, an application that can be used only after being logged in to may be a system application of the terminal, or may be a third-party application, for example, the China Merchants Bank Mobile Bank, if the user provisions fingerprint login, after the authentication on the captured fingerprint information in S904 succeeds, in response to the fourth operation, the terminal may directly open the China Merchants Bank Mobile Bank associated with the China Merchants Bank Mobile Bank icon 1003, and display a main interface after the login succeeds.

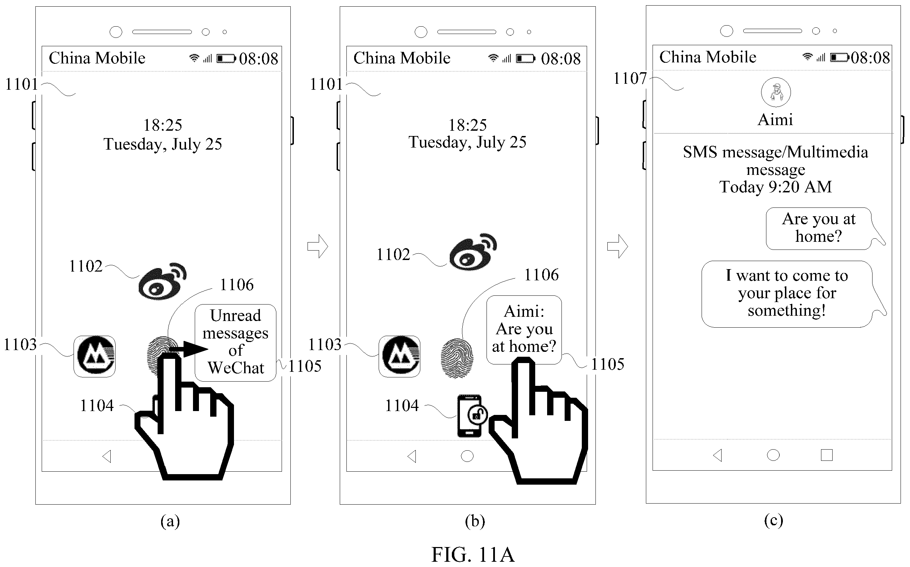

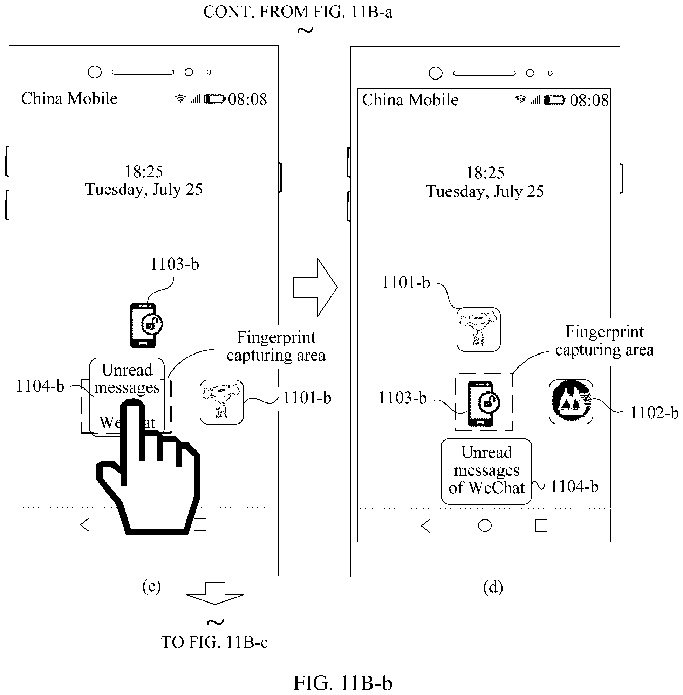

In some other embodiments of this application, if the fourth operation is a slide operation, and the user passes through the fingerprint capturing area when the user performs the slide operation, the third operation and the fourth operation may be continuous operations of a finger of the user without leaving the touchscreen. It may be simply understood as that the user performs the fourth operation without needing to perform the third operation. In a process in which the user performs the fourth operation, when the user touches the fingerprint capturing area, the terminal captures the fingerprint information of the user. The terminal performs the fingerprint authentication on the fingerprint information. After the fingerprint authentication succeeds, in response to the fourth operation, the terminal opens the application associated with the control. The terminal may further display the function interface of the application associated with the control. For example, the fourth operation is a slide operation. The termination point of the slide operation is any control, such as identifier of the notification message, included in the navigation menu. It is assumed that the start point of the slide operation is the fingerprint capturing area. As shown in (a) in FIG. 11A, an interface currently displayed by the terminal is a lock screen interface 1101. The lock screen interface 1101 includes a navigation menu. The navigation menu includes four controls, which are respectively a Weibo icon 1102, a China Merchants Bank Mobile Bank icon 1103, an unlock icon 1104, and an identifier 1105 of a notification message. It is assumed that the notification message is a chat message that is received in WeChat and that is sent by another user. The lock screen interface 1101 further includes a fingerprint pattern 1106. If the user wants to view the notification message, the user may start to perform a slide operation from the fingerprint capturing area, namely, the fingerprint icon 1106. As shown in (b) in FIG. 11A, a termination point of the slide operation is the identifier 1105 of the notification message. In a process in which the user performs the slide operation, when the user touches the fingerprint pattern 1106, the fingerprint recognizer disposed below the touchscreen of the terminal may capture the fingerprint information of the user. The terminal performs the fingerprint authentication on the fingerprint information. After the fingerprint authentication succeeds, in response to the slide operation, as shown in (c) in FIG. 11A, the terminal opens a chat details interface 1107.

In some other embodiments of this application, the identifier of the notification message that is included in the navigation menu may be a prompt box. Before the fingerprint authentication, the prompt box includes the notification message displayed in an encryption manner. For example, as shown in (a) in FIG. 11A, the prompt box includes words "Unread messages of WeChat". After the fingerprint authentication succeeds, all or a part of content of the notification message may be displayed in the prompt box. For example, with reference to (b) in FIG. 11A, words "Aimi: Are you at home?" may be displayed in the prompt box. "Aimi: Are you at home?" is a part of the content included in the notification message. After the terminal receives the fourth operation of the user, the terminal may open WeChat in response to the fourth operation. The chat details interface 1107 displays the content of the notification message.

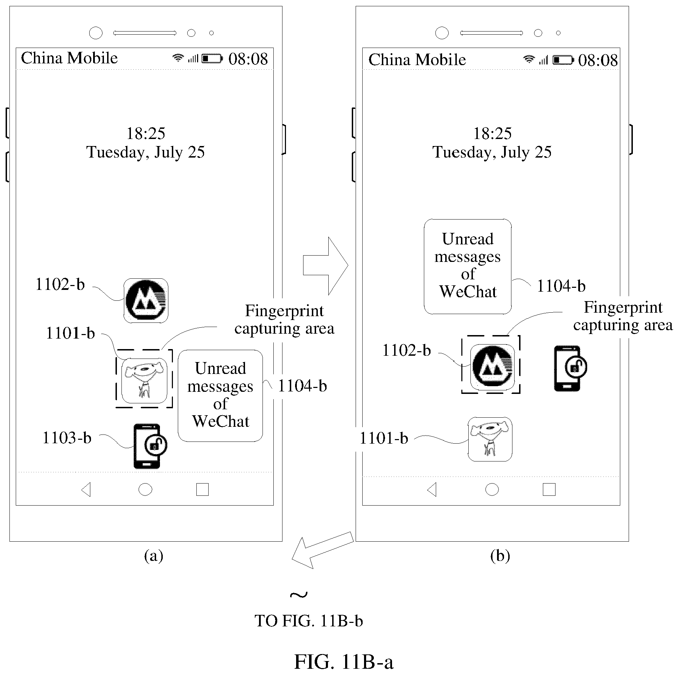

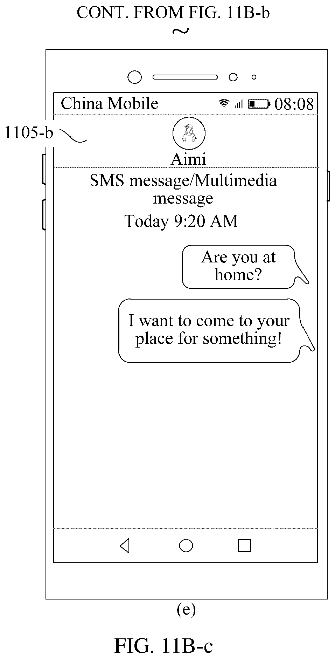

In the foregoing examples, an example in which a display location of the control included in the navigation menu on the touchscreen is fixed is used for description. In some other embodiments of this application, the display location of the control included in the navigation menu on the touchscreen may be dynamically changed. For example, with reference to FIG. 11B-a, FIG. 11B-b, and FIG. 11B-c, the second lock screen interface includes a navigation menu. An example in which the navigation menu includes four controls, which are respectively a Jingdong icon 1101-b, a China Merchants Bank Mobile Bank icon 1102-b, an unlock icon 1103-b, and an identifier 1104-b of a notification message is used. As shown in (a) to (d) in FIG. 11B-a and FIG. 11B-b, the controls included in the navigation menu may be automatically and sequentially displayed on the fingerprint capturing area. In this scenario, the user may perform one operation, such as a click operation, to implement the fingerprint authentication and open an application associated with the control. As shown in (d) in FIG. 11B-b, when the identifier 1104-b of the notification message is displayed on the fingerprint capturing area, the user may perform a click operation on the fingerprint capturing area of the touchscreen. In a process in which the user performs the click operation, the terminal may capture the fingerprint information of the user. After the fingerprint authentication succeeds, as shown in (e) in FIG. 11B-c, the terminal opens a chat details interface 1105-b. A sequence of displaying the controls included in the navigation menu on the fingerprint capturing area may be predefined, or set by the user, or obtained through matching based on a scenario. For example, if the user is currently located in a Jingdong convenience store, the Jingdong icon may be preferentially displayed on the fingerprint capturing area.

It should be noted that specific descriptions of related content in S901 to S906 in the embodiments of this application are similar to related descriptions of corresponding content in S301 to S306 in some other embodiments of this application. For the specific descriptions of the related content in S901 to S906, refer to the related descriptions of the corresponding content in S301 to S306 in some other embodiments, and details are not described in the embodiments of this application again one by one.

According to the method provided in the embodiments of this application, the terminal displays the second lock screen interface including the navigation menu, so that the user may directly operate the control included in the navigation menu on the lock screen interface. In response to the operation of the user, the terminal may directly open the function interface of the application associated with the control operated by the user. Complexity of the operation of the user is reduced, use efficiency of the terminal is improved, and efficient interaction between the terminal and the user is implemented.

A third application scenario: It is assumed that the terminal is in an unlock state. Controls included in the navigation menu are the icon of the application, the identifier of the function of the application, and a safe identifier. Using an example in which the function of the application is a payment and receipt function of WeChat, the navigation menu may be displayed on any non-lock screen interface. For example, the navigation menu may be displayed on the home screen, or a main interface of the application, or a function interface of the application. The user can quickly open an application associated with the control by operating the control included in the navigation menu. A function interface of the application associated with the control is displayed. In addition, in some embodiments of this application, it is assumed that the fingerprint recognition function of the terminal is implemented by installing the fingerprint recognizer on the home screen button of the terminal.

In this application scenario, steps included in the method in the embodiments of this application are similar to S301 to S306 that are described above. Details are not described in this application again one by one. For ease of understanding of a person skilled in the art, a specific method in the embodiments of this application in this application scenario is described with reference to an example shown in FIG. 12A, FIG 12B, and FIG. 12C.

For example, the user is using an Amazon application. As shown in (a) in FIG. 12A, an interface currently displayed by the terminal is a main interface 1201 of Amazon. In this case, the user wants to use the payment and receipt function of WeChat. The user may perform an operation of triggering the terminal to capture fingerprint information of the user on the main interface 1201 of Amazon. The operation is different from a normal operation on the currently displayed interface, for example, a click operation on a link on the main interface 1201. The user performs a third operation. As shown in (b) in FIG. 12B, the third operation is a click operation performed by the user on the fingerprint capturing area of the touchscreen of the terminal. In this way, when the terminal receives the third operation of the user, the fingerprint recognizer installed below the touchscreen of the terminal may capture the fingerprint information of the user. After capturing the fingerprint information of the user, the terminal may perform fingerprint authentication on the captured fingerprint information. If the fingerprint authentication succeeds, the terminal may display a navigation menu on the main interface 1201 of Amazon. For example, as shown in (c) in FIG. 12C, the navigation menu includes three controls, which are respectively an Alipay icon 1202, an identifier 1203 of a payment and receipt function of WeChat, and a safe identifier 1204. When the identifier 1203 of the payment and receipt function of WeChat is a valid quick response code of the payment and receipt function of WeChat, another user may scan the quick response code included in the navigation menu by directly using a terminal of the another user, to implement payment and receipt. When the identifier 1203 of the payment and receipt function of WeChat is an icon used to open the payment and receipt function of WeChat, the user may perform a fourth operation. In response to the fourth operation, the terminal may open the payment and receipt function of WeChat and display the valid quick response code on the payment and receipt function interface, so that another user may scan, by using a terminal of the another user, the valid quick response code displayed on the payment and receipt function interface, to implement payment and receipt. The safe may be an embedded application of the terminal, namely, a system application of the terminal. The application can be used only after being logged in to. For example, the safe includes data such as a photo that is of the user and that has a relatively high privacy level. In the embodiments of this application, after the fingerprint authentication for the user succeeds, if the user opens the safe by using the navigation menu, the user may directly access the data in the safe without entering a user name and a password by the user again. In some other embodiments of this application, for a shopping-type application such as Amazon, Taobao, or Jingdong, a currently displayed interface is a details interface of an object. The user wants to buy this object. The user may perform an operation of triggering the terminal to capture the fingerprint information of the user on the details interface of the object. The operation is different from a normal operation on the currently displayed interface. The user performs a third operation. The third operation is a click operation performed by the user on the fingerprint capturing area of the touchscreen of the terminal. In this way, when the terminal receives the third operation of the user, the fingerprint recognizer installed below the touchscreen of the terminal may capture the fingerprint information of the user. After capturing the fingerprint information of the user, the terminal may perform the fingerprint authentication on the captured fingerprint information. If the fingerprint authentication succeeds, the terminal directly enters a settlement page, thereby implementing one-click ordering.

In the first application scenario, the second application scenario, and the third application scenario, the control included in the navigation menu may be predefined, or may be set by the user, or may be recommended by a system. When the control included in the navigation menu is recommended by the system, the control included in the navigation menu may be changed in real-time based on information such as a time, a location, and frequency that the user uses a terminal function such as an application or an application function. An example in which a navigation menu is set by the user is used. For example, as shown in FIG. 13, the user may add or delete a control included in the navigation menu on a setting interface 1301. Alternatively, a location of each control in the navigation menu may be edited on the setting interface 1301. For example, on the setting interface 1301 shown in FIG. 13, a button 1302 is used to delete a corresponding control from the navigation menu. A button 1303 is used to add a corresponding control to the navigation menu. A button 1304 is used to edit a location of a corresponding control in the navigation menu. In addition, a quantity of controls included in the navigation menu is not specifically limited in the embodiments of this application.

In some other embodiments of this application, in the first application scenario, the second application scenario, and the third application scenario, the terminal may alternatively not display the navigation menu. However, after the fingerprint authentication for the user succeeds, and the fourth operation is received, the terminal directly opens an application associated with the control, and displays a function interface of the application associated with the control. For example, referring to FIG. 14A, FIG. 14B, and FIG. 14C, it is assumed that the fingerprint recognition function of the terminal is implemented by installing the fingerprint recognizer on the home screen button of the terminal. As shown in (a) in FIG. 14A, an interface currently displayed by the terminal is a lock screen interface 1401. The lock screen interface 1401 may be the first lock screen interface in this application. The lock screen interface 1401 includes a fingerprint pattern 1402. The fingerprint pattern 1402 is used to inform the user of the location of the fingerprint capturing area on the touchscreen of the terminal. When the user touches the fingerprint pattern 1402, the terminal may capture the fingerprint information of the user. After capturing the fingerprint information, the terminal may authenticate the fingerprint information. It is assumed that four directions up, down, left, and right may be predefined on a cross-shaped line centered on the fingerprint capturing area, to rapidly start Taobao, display the home screen, start WeChat, or start a call. When the user wants to start Taobao, as shown in (b) in FIG. 14B, the user may perform an upward slide operation. When the user performs the slide operation, the finger passes through the fingerprint capturing area. It is assumed that a start point of the slide operation is the fingerprint capturing area. When the terminal receives the slide operation of the user, if the fingerprint authentication succeeds, the terminal may open Taobao. As shown in (c) in FIG. 14C, the terminal displays a main interface 1403 of Taobao.

In some other embodiments of this application, to further protect privacy of the user, in the first application scenario, the second application scenario, and the third application scenario, facial recognition may further be performed for the user. After both the facial recognition and the fingerprint authentication are successful, when the user performs the fourth operation on a control in the navigation menu, the terminal opens an application associated with the control, and displays a function interface of the application associated with the control. Using an example in which the facial recognition is added to the first application scenario, As shown in FIG. 15A and FIG. 15B, S304 may be specifically the following steps.

S1501: After the fingerprint authentication performed by the terminal on the fingerprint information of the user succeeds, the terminal may enable a facial recognition function.

S1502: The terminal captures facial information of the user.

S1503: The terminal authenticates the captured facial information.

S1504: After the authentication on the captured facial information succeeds, the terminal displays the second lock screen interface. The second lock screen interface includes the navigation menu.

In some embodiments of this application, navigation menus including different controls may be displayed for different facial information. For example, if the facial information captured by the terminal indicates that the user is a child, the control included in the navigation menu may be a small game icon, or the like. For example, if the facial information captured by the terminal indicates that the user is a youth, the control included in the navigation menu may be a music icon, a WeChat icon, or the like.

For specific descriptions of another process and content, refer to the embodiments shown in FIG. 3, and details are not described in this application again one by one.

According to the method provided in the embodiments of this application, after the fingerprint authentication performed by the terminal on the captured fingerprint information of the user succeeds, the terminal may perform the facial recognition on the user. After both the facial recognition and the fingerprint authentication are successful, the second lock screen interface including the navigation menu is displayed, to further protect the privacy of the user.

It should be understood that the descriptions of the technical features, technical solutions, or similar language in this application does not imply that all features can be implemented in any single embodiment. The technical features and technical solutions described in the embodiments may alternatively be combined in any suitable manner. In addition, it should be noted that in the embodiments of this application, an authentication manner in another form such as facial recognition, voiceprint recognition, or iris recognition may alternatively be used to replace the fingerprint authentication, to protect the privacy of the user.

It can be understood that, to implement the foregoing functions, the terminal includes corresponding hardware structures and/or software modules for performing the functions. A person of ordinary skill in the art should easily be aware that, in combination with the examples described in the embodiments disclosed in this specification, units, algorithms, and steps may be implemented by using hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the embodiments of this application.

An embodiment of this application further provides a terminal for implementing the foregoing method embodiments. Specifically, function modules of the terminal may be divided. For example, the function modules may be divided corresponding to the functions, or two or more functions may be integrated into one processing module. The integrated module may be implemented in a form of hardware, or may be implemented in a form of a software function module. It should be noted that, in this embodiment of this application, division of the modules is an example, and is merely logical function division. In an actual implementation, another division manner may be used.

When the function modules are divided corresponding to the functions, FIG. 16 is a possible schematic structural diagram of a display apparatus 1600 according to an embodiment of this application. The display apparatus 1600 may be applied to the terminal in the foregoing embodiments. The display apparatus 1600 may include a display unit 1601, an input unit 1602, a locking unit 1603, and a capturing unit 1604.

The display unit 1601 is configured to support the terminal in performing S1504 and operations of displaying the function interface of the application associated with the control in S304, S306, S901, and S906 in the foregoing method embodiments, and/or used in another process of the technology described in this specification. The display unit may be a touchscreen, or other hardware, or integration of hardware and software.

The input unit 1602 is configured to receive an input, such as a touch input, voice input, gesture input, or floating operation, of a user on a display interface of the terminal. The input unit 1602 is configured to support the terminal in performing S301, S305, S902, and S905 in the foregoing method embodiments, and/or used in another process of the technology described in this specification. The input unit may be a touchscreen, or other hardware, or integration of hardware and software.

The locking unit 1603 is configured to support the terminal in performing the operation of locking the terminal in the foregoing method embodiments, and/or used in another process of the technology described in this specification.

The capturing unit 1604 is configured to support the terminal in performing S302, S903, S1502 in the foregoing method embodiments, and/or used in another process of the technology described in this specification.

In this embodiment of this application, further, as shown in FIG. 16, the display apparatus 1600 may further include a receiving unit 1605 and a control unit 1606.

The receiving unit 1605 is configured to support the terminal in performing the receiving operation, such as receiving the notification message, in the foregoing method embodiments, and/or used in another process of the technology described in this specification.

The control unit 1606 is configured to support the terminal in performing the control operation, such as lighting up the screen, in the foregoing method embodiments, and/or used in another process of the technology described in this specification.

For all related content of the steps in the foregoing method embodiments, refer to function descriptions of corresponding function modules, and details are not described herein again.

Certainly, the display apparatus 1600 includes but is not limited to the foregoing listed unit modules. For example, the display apparatus may further include a sending unit configured to send data or a signal to another device, an authentication unit configured to authenticate fingerprint information and/or facial information of the user, and the like. In addition, functions that can be specifically implemented by the foregoing function units also include but are not limited to the functions corresponding the method steps in the foregoing examples. For detailed descriptions of another unit in the display apparatus 1600, refer to the detailed descriptions of the corresponding method steps corresponding to the another unit, and details are not described in this embodiment again.

When an integrated unit is used, FIG. 17 is another possible schematic structural diagram of a display apparatus 1700 according to an embodiment of this application. The display apparatus 1700 may be applied to the terminal in the foregoing embodiments. The display apparatus 1700 may include a processing module 1701, a storage module 1702, and a display module 1703. The processing module 1701 is configured to control and manage an action of the terminal. The display module 1703 is configured to display content as indicated by the processing module 1701. The storage module 1702 is configured to store program code and data of the terminal. Further, the display apparatus 1700 may further include an input module and a communications module. The communications module is configured to support the terminal in communicating with another network entity, to implement functions such as a call, data exchange, and Internet access of the terminal.

The processing module 1701 may be a processor or a controller. The communications module may be a transceiver, an RF circuit, a communications interface, or the like. The storage module 1702 may be a memory. The display module may be a screen or a display. The input module may be a touchscreen, a voice input apparatus, a fingerprint recognizer, or the like.

When the processing module 1701 is the processor, the communications module is the RF circuit, the storage module 1702 is the memory, and the display module 1703 is the touchscreen, the display apparatus 1700 provided in this embodiment of this application may be the mobile phone shown in FIG. 1. The communications module may not only include the RF circuit, but also include a Wi-Fi module, an NFC module, and a Bluetooth module. The communications modules such as the RF circuit, the NFC module, the Wi-Fi module, and the Bluetooth module may be collectively referred to as a communications interface. The processor, the RF circuit, the touchscreen, and the memory may be coupled together by using a bus.

As shown in FIG. 18, some other embodiments of this application further provide a terminal 1800. The terminal 1800 may include one or more processors 1801, a memory 1802, a touchscreen 1803, and one or more computer programs 1804. The components may be connected by using one or more communications buses 1805. The touchscreen 1803 may include a touch-sensitive surface 1806 and a display 1807. The one or more computer programs 1804 are stored in the memory 1802, and are configured to be executed by the one or more processors 1801. The one or more computer programs 1804 may include instructions, and the instructions may be used to perform the steps in FIG. 3 and a corresponding embodiment. In some other embodiments of this application, the instructions may alternatively be configured to perform steps in FIG. 9 and a corresponding embodiment. In some other embodiments of this application, the instructions may alternatively be configured to perform the steps in FIG. 15A and FIG. 15B and a corresponding embodiment. Certainly, the terminal 1800 includes but is not limited to the foregoing listed components. For example, the terminal 1800 may further include a radio frequency circuit, a positioning apparatus, a sensor, and the like. When the terminal 1800 includes other components, the terminal 1800 may be the mobile phone shown in FIG. 1.

Some other embodiments of this application further provide a computer storage medium. The computer storage medium stores computer program code, and when the foregoing processor executes the computer program code, the terminal performs related method steps in any one of FIG. 3, FIG. 9, or FIG. 15A and FIG. 15B, to implement the method in the foregoing embodiments.

Some other embodiments of this application further provide a computer program product, and when the computer program product is run on a computer, the computer is enabled to perform related method steps in any one of FIG. 3, FIG. 9, or FIG. 15A and FIG. 15B, to implement the method in the foregoing embodiments.

Some other embodiments of this application further provide a control device. The control device includes a processor and a memory, the memory is configured to store computer program code, and the computer program code includes a computer instruction. When the processor executes the computer instruction, the control device performs related method steps in any one of FIG. 3, FIG. 9, or FIG. 15A and FIG. 15B, to implement the method in the foregoing embodiments. The control device may be an integrated circuit IC, or may be a system on chip SOC. The integrated circuit may be a universal integrated circuit, or may be a field programmable gate array FPGA, or may be an application-specific integrated circuit ASIC.

All of the terminal, computer storage medium, computer program product, or control device that are provided in the embodiments of this application are configured to perform a corresponding method provided above. Therefore, for beneficial effects that the terminal, computer storage medium, computer program product, or control device can achieve, refer to beneficial effects in the corresponding method provided above, and details are not described herein again.

The foregoing descriptions about implementations allow a person skilled in the art to understand that, for the purpose of convenient and brief description, division of the foregoing function modules is taken as an example for illustration. In an actual application, the foregoing functions can be allocated to different function modules and implemented based on a requirement, to be specific, an inner structure of an apparatus is divided into different function modules to implement all or some of the functions described above. For a specific working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the module or unit division is merely logical function division and may be other division in actual implementations. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, function units in the embodiments of this application may be integrated into one processing unit, or each of the units may exist alone physically, or two or more units are integrated into one unit. The integrated unit may be implemented in a form of hardware, or may be implemented in a form of a software function unit.

When the integrated unit is implemented in the form of a software function unit and sold or used as an independent product, the integrated unit may be stored in a computer-readable storage medium. Based on such an understanding, the technical solutions of the embodiments of this application essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of this application. The foregoing storage medium includes: any medium that can store program code, such as a flash memory, a removable hard disk, a read-only memory, a random access memory, a magnetic disk, or an optical disc.

The foregoing descriptions are merely specific implementations of the embodiments of this application, but are not intended to limit the protection scope of the embodiments of this application. Any variation or replacement within the technical scope disclosed in the embodiments of this application shall fall within the protection scope of the embodiments of this application. Therefore, the protection scope of the embodiments of this application shall be subject to the protection scope of the claims.

## Claims

1. A display method, applied to a terminal, wherein the terminal comprises a touchscreen, a fingerprint recognizer is configured in a fingerprint capturing area on the touchscreen, and the method comprises:
displaying, by the terminal, a home screen;
receiving, by the terminal, a first operation performed by a user;
locking the terminal, in a lock screen state, in response to the first operation;
when the terminal is in the lock screen state, receiving, by the terminal, a second operation of the user;
displaying, by the terminal, a first lock screen interface in response to the second operation;
when the terminal is in the lock screen state, receiving, by the terminal, a third operation performed by the user on the touchscreen (S301);
in response to the third operation, capturing, by the terminal, fingerprint information of the user by using the fingerprint recognizer (S302); and **characterised by**:
displaying, by the terminal, a second lock screen interface in response to successful authentication on the captured fingerprint information when the captured fingerprint information matches prestored fingerprint information (S303), wherein the second lock screen interface is different from the first lock screen interface and comprises a navigation menu, and the navigation menu comprises two or more controls, and the controls comprise an icon of an application, or an identifier of a function of the application, and wherein the controls open different applications, and one of the controls provides access to the home screen;
receiving, by the terminal, a fourth operation of the user on the second lock screen interface (S305);
wherein the fourth operation is a slide operation and a termination point of the slide operation is one of the two or more controls comprised in the navigation menu, in response to the fourth operation, opening, by the terminal, the application associated with the control and displaying, by the terminal, a function interface of the application associated with the control (S306).

2. The method according to claim 1, wherein the two or more controls further comprises at least one of the following: an icon of a folder, an identifier of a notification message, and an unlock icon.

3. The method according to claim 2, wherein when the navigation menu comprises the unlock icon, the displaying, by the terminal, the home screen in response to the fourth operation comprises:
the fourth operation is a slide operation and a termination point of the slide operation is the unlock icon, displaying, by the terminal, the home screen in response to the fourth operation.

4. The method according to any one of claims 1 to 3, wherein the fourth operation is the slide operation, and the third operation and the fourth operation are continuous operations of a finger of the user without leaving the touchscreen.

5. The method according to any one of claims 1 to 4, wherein when the terminal receives the third operation performed by the user on the touchscreen, the terminal is in a screen-off state, wherein in the screen-off state, the touchscreen displays a fingerprint pattern, and a location of the fingerprint pattern is associated with the fingerprint recognizer; and
the receiving, by the terminal, a third operation performed by the user on the touchscreen comprises:
receiving, by the terminal, the third operation performed by the user at the location at which the fingerprint pattern is displayed.

6. The method according to any one of claims 1 to 4, wherein the first lock screen interface comprises a fingerprint pattern, and a location of the fingerprint pattern is associated with the fingerprint recognizer; and
the receiving, by the terminal, a third operation performed by the user on the touchscreen comprises:
receiving, by the terminal, the third operation performed by the user at the location at which the fingerprint pattern comprised in the first lock screen interface is displayed.

7. The method according to any one of claims 1 to 4, wherein before the receiving, by the terminal, a third operation performed by the user on the touchscreen, the method further comprises:
receiving, by the terminal, a notification message; and
lighting up, by the terminal, the touchscreen and displaying the first lock screen interface is displayed on the touchscreen, wherein the first lock screen interface comprises a fingerprint pattern, and a location of the fingerprint pattern is associated with the fingerprint recognizer; and
the receiving, by the terminal, a third operation performed by the user on the touchscreen comprises:
receiving, by the terminal, the third operation performed by the user at the location at which the fingerprint pattern comprised in the first lock screen interface is displayed.

8. The method according to any one of claims 1 to 4, wherein
when there is an unread notification message, displaying, by the terminal, the second lock screen interface in response to the successful authentication on the captured fingerprint information.

9. The method according to any one of claims 1 to 8, wherein the method further comprises:
displaying, by the terminal, a password login interface in response to unsuccessful authentication on the captured fingerprint information;
receiving, by the terminal, a login password entered by the user on the password login interface; and
displaying, by the terminal, the second lock screen interface in response to successful authentication on the login password.

10. The method according to any preceding claim, wherein the function of the application is a payment function; and
the identifier of the function of the application is a valid payment code of the payment function; or
when the control is an identifier of the payment function, the displaying a function interface of a terminal function corresponding to the control comprises: displaying, by the terminal, a function interface of the payment function, wherein the function interface comprises the valid payment code of the payment function.

11. The method according to claim 2 or claim 3, wherein the identifier of the notification message is a prompt box, before the fingerprint authentication, the prompt box comprises the notification message displayed in an encryption manner, and after the authentication on the captured fingerprint information succeeds, the prompt box comprises content of the notification message; or
when the control is the identifier of the notification message, the displaying a function interface of a first application associated with the control comprises: displaying, by the terminal, a details interface of the notification message, wherein the details interface comprises content of the notification message.

12. The method according to any one of claims 1 to 11, wherein the control comprised in the navigation menu is predefined, or recommended by the terminal, or set by the user.

13. A terminal, comprising one or more processors, a memory, a touchscreen, and one or more computer programs, wherein the one or more processors, the memory, the touchscreen, and the one or more computer programs are connected by using one or more communications buses; the touchscreen comprises a touch surface and a display; the one or more computer programs are stored in the memory and are configured to be executed by the one or more processors; and the one or more computer programs comprise instructions, and the instructions are used to perform the display method according to any one of claims 1 to 12.

14. A computer storage medium, comprising a computer instruction, wherein when the computer instruction is run on a terminal, the terminal is enabled to perform the display method according to any one of claims 1 to 12.

## Patentansprüche

1. Anzeigeverfahren, das auf ein Endgerät angewendet wird, wobei das Endgerät einen Touchscreen umfasst, eine Fingerabdruckerkennung in einem Fingerabdruckerfassungsbereich auf dem Touchscreen konfiguriert ist und das Verfahren umfasst:
Anzeigen, durch das Endgerät, eines Startbildschirms;
Empfangen, durch das Endgerät, eines ersten Vorgangs, der durch einen Benutzer durchgeführt wird;
Sperren des Endgeräts in einem Sperrbildschirmzustand als Reaktion auf den ersten Vorgang;
wenn sich das Endgerät in dem Sperrbildschirmzustand befindet, Empfangen, durch das Endgerät, eines zweiten Vorgangs des Benutzers;
Anzeigen, durch das Endgerät, einer ersten Sperrbildschirmschnittstelle als Reaktion auf den zweiten Vorgang;
wenn sich das Endgerät in dem Sperrbildschirmzustand befindet, Empfangen, durch das Endgerät, eines dritten Vorgangs, der durch den Benutzer auf dem Touchscreen (S301) durchgeführt wird;
als Reaktion auf den dritten Vorgang, Erfassen, durch das Endgerät, von Fingerabdruckinformationen des Benutzers durch Verwenden der Fingerabdruckerkennung (S302); und **gekennzeichnet durch:**
Anzeigen, durch das Endgerät, einer zweiten Sperrbildschirmschnittstelle als Reaktion auf eine erfolgreiche Authentifizierung auf den erfassten Fingerabdruckinformationen, wenn die erfassten Fingerabdruckinformationen mit vorgespeicherten Fingerabdruckinformationen (S303) übereinstimmen, wobei sich die zweite Sperrbildschirmschnittstelle von der ersten Sperrbildschirmschnittstelle unterscheidet und ein Navigationsmenü umfasst, und das Navigationsmenü zwei oder mehr Steuervorrichtungen umfasst, und die Steuervorrichtungen ein Symbol einer Anwendung oder einen Identifizierer einer Funktion der Anwendung umfassen, und wobei die Steuervorrichtungen unterschiedliche Anwendungen öffnen und eines der Steuervorrichtungen Zugriff auf den Starttouchscreen bereitstellt;
Empfangen, durch das Endgerät, eines vierten Vorgangs des Benutzers auf der zweiten Sperrbildschirmschnittstelle (S305);
wobei der vierte Vorgang ein Schiebevorgang ist und ein Endpunkt des Schiebevorgangs eine der zwei oder mehr Steuervorrichtungen ist, die in dem Navigationsmenü enthalten sind, als Reaktion auf den vierten Vorgang, Öffnen, durch das Endgerät, der Anwendung, die der Steuervorrichtung zugeordnet ist, und Anzeigen, durch das Endgerät, einer Funktionsschnittstelle der Anwendung, die der Steuervorrichtung (S306) zugeordnet ist.

2. Verfahren nach Anspruch 1, wobei zwei oder mehr Steuervorrichtungen ferner mindestens eines von den Folgenden umfassen: ein Symbol eines Ordners, einen Identifizierer einer Benachrichtigungsnachricht und ein Entsperrsymbol.

3. Verfahren nach Anspruch 2, wobei, wenn das Navigationsmenü das Entsperrsymbol umfasst, das Anzeigen, durch das Endgerät, des Startbildschirms als Reaktion auf den vierten Vorgang umfasst:
der vierte Vorgang ein Schiebevorgang ist und ein Endpunkt des Schiebevorgangs das Entsperrsymbol ist, der, durch das Endgerät, den Startbildschirm als Reaktion auf den vierten Vorgang anzeigt.

4. Verfahren nach einem der Ansprüche 1 bis 3, wobei der vierte Vorgang der Schiebevorgang ist und der dritte Vorgang und der vierte Vorgang kontinuierliche Vorgänge eines Fingers des Benutzers sind, ohne den Touchscreen zu verlassen.

5. Verfahren nach einem der Ansprüche 1 bis 4, wobei, wenn das Endgerät den dritten Vorgang empfängt, der durch den Benutzer auf dem Touchscreen durchgeführt wird, sich das Endgerät in einem Zustand eines ausgeschalteten Touchscreens befindet, wobei in dem Zustand des ausgeschalteten Touchscreens, der Touchscreen ein Fingerabdruckmuster anzeigt, und ein Ort des Fingerabdruckmusters der Fingerabdruckerkennung zugeordnet ist; und
das Empfangen, durch das Endgerät, eines dritten Vorgangs, der durch den Benutzer auf dem Touchscreen durchgeführt wird, umfasst:
Empfangen, durch das Endgerät, des dritten Vorgangs, der durch den Benutzer an dem Ort durchgeführt wird, an der das Fingerabdruckmuster angezeigt wird.

6. Verfahren nach einem der Ansprüche 1 bis 4, wobei die erste Sperrbildschirmschnittstelle ein Fingerabdruckmuster umfasst und ein Ort des Fingerabdruckmusters der Fingerabdruckerkennung zugeordnet ist; und
das Empfangen, durch das Endgerät, eines dritten Vorgangs, der durch den Benutzer auf dem Touchscreen durchgeführt wird, umfasst:
Empfangen, durch das Endgerät, des dritten Vorgangs, die durch den Benutzer an dem Ort durchgeführt wird, an dem das Fingerabdruckmuster, das in der ersten Sperrbildschirmoberfläche enthalten ist, angezeigt wird.

7. Verfahren nach einem der Ansprüche 1 bis 4, wobei vor dem Empfangen, durch das Endgerät, eines dritten Vorgangs, der durch den Benutzer auf dem Touchscreen durchgeführt wird, das Verfahren ferner umfasst:
Empfangen, durch das Endgerät, einer Benachrichtigungsnachricht; und
Aufleuchten, durch das Endgerät, des Touchscreens und Anzeigen der ersten Sperrbildschirmschnittstelle auf dem Touchscreen, wobei die erste Sperrbildschirmschnittstelle ein Fingerabdruckmuster umfasst und ein Ort des Fingerabdruckmusters der Fingerabdruckerkennung zugeordnet ist; und
das Empfangen, durch das Endgerät, eines dritten Vorgangs, der durch den Benutzer auf dem Touchscreen durchgeführt wird, umfasst:
Empfangen, durch das Endgerät, des dritten Vorgangs, die durch den Benutzer an dem Ort durchgeführt wird, an dem das Fingerabdruckmuster, das in der ersten Sperrbildschirmoberfläche enthalten ist, angezeigt wird.

8. Verfahren nach einem der Ansprüche 1 bis 4, wobei, wenn eine ungelesene Benachrichtigungsnachricht vorliegt, Anzeigen, durch das Endgerät, der zweiten Sperrbildschirmschnittstelle als Reaktion auf die erfolgreiche Authentifizierung der erfassten Fingerabdruckinformationen.

9. Verfahren nach einem der Ansprüche 1 bis 8, wobei das Verfahren ferner umfasst:
Anzeigen, durch das Endgerät, einer Passwortanmeldeschnittstelle als Reaktion auf eine erfolglose Authentifizierung auf den erfassten Fingerabdruckinformationen;
Empfangen, durch das Endgerät, eines Anmeldepassworts, das durch den Benutzer auf der Passwortanmeldeoberfläche eingegeben wurde; und
Anzeigen, durch das Endgerät, der zweiten Sperrbildschirmschnittstelle als Reaktion auf eine erfolgreiche Authentifizierung auf dem Anmeldepasswort.

10. Verfahren nach einem der vorstehenden Ansprüche, wobei die Funktion der Anwendung eine Zahlungsfunktion ist; und
der Identifizierer der Funktion der Anwendung ein gültiger Zahlungscode der Zahlungsfunktion ist; oder
wenn die Steuervorrichtung ein Identifizierer der Zahlungsfunktion ist, das Anzeigen einer Funktionsschnittstelle einer Endgerätfunktion, die der Steuervorrichtung entspricht, umfasst: Anzeigen, durch das Endgerät, einer Funktionsschnittstelle der Zahlungsfunktion, wobei die Funktionsschnittstelle den gültigen Zahlungscode der Zahlungsfunktion umfasst.

11. Verfahren nach Anspruch 2 oder 3, wobei der Identifizierer der Benachrichtigungsnachricht ein Aufforderungsfeld ist, wobei das Aufforderungsfeld vor der Fingerabdruckauthentifizierung die Benachrichtigungsnachricht umfasst, die in einer Verschlüsselungsmethode angezeigt wird, und nachdem die Authentifizierung auf den erfassten Fingerabdruckinformationen erfolgreich ist, das Aufforderungsfeld den Inhalt der Benachrichtigungsnachricht umfasst; oder
wenn die Steuervorrichtung der Identifizierer der Benachrichtigungsnachricht ist, das Anzeigen einer Funktionsschnittstelle einer ersten Anwendung, die der Steuervorrichtung zugeordnet ist, umfasst: Anzeigen, durch das Endgerät, einer Detailschnittstelle der Benachrichtigungsnachricht, wobei die Detailschnittstelle einen Inhalt der Benachrichtigungsnachricht umfasst.

12. Verfahren nach einem der Ansprüche 1 bis 11, wobei die Steuervorrichtung, die in dem Navigationsmenü enthalten ist, durch das Endgerät vordefiniert oder empfohlen wird oder durch den Benutzer eingestellt wird.

13. Endgerät, umfassend einen oder mehrere Prozessoren, einen Speicher, einen Touchscreen und ein oder mehrere Computerprogramme, wobei der eine oder die mehreren Prozessoren, der Speicher, der Touchscreen und das eine oder die mehreren Computerprogramme durch Verwenden einer oder mehrerer Kommunikationsbusse verbunden sind; der Touchscreen eine Berührungsoberfläche und eine Anzeige umfasst; das eine oder die mehreren Computerprogramme in dem Speicher gespeichert sind und konfiguriert sind, um durch den einen oder die mehreren Prozessoren ausgeführt zu werden; und das eine oder die mehreren Computerprogramme Anweisungen umfassen und die Anweisungen verwendet werden, um das Anzeigeverfahren nach einem der Ansprüche 1 bis 12 durchzuführen.

14. Computerspeichermedium, umfassend eine Computeranweisung, wobei, wenn die Computeranweisung auf einem Endgerät laufen gelassen wird, das Endgerät aktiviert wird, um das Anzeigeverfahren nach einem der Ansprüche 1 bis 12 durchzuführen.

## Revendications

1. Procédé d'affichage, appliqué à un terminal, dans lequel le terminal comprend un écran tactile, un dispositif de reconnaissance d'empreinte digitale est configuré dans une zone de capture d'empreinte digitale sur l'écran tactile et le procédé comprend :
l'affichage, par le terminal, d'un écran d'accueil ;
la réception, par le terminal, d'une première opération effectuée par un utilisateur ;
le verrouillage du terminal, dans un état d'écran de verrouillage, en réponse à la première opération ;
lorsque le terminal est dans l'état d'écran de verrouillage, la réception, par le terminal, d'une deuxième opération de l'utilisateur ;
l'affichage, par le terminal, d'une première interface d'écran de verrouillage en réponse à la deuxième opération ;
lorsque le terminal est dans l'état d'écran de verrouillge, la réception, par le terminal, d'une troisième opération effectuée par l'utilisateur sur l'écran tactile (S301) ;
en réponse à la troisième opération, la capture, par le terminal, des informations d'empreinte digitale de l'utilisateur en utilisant le dispositif de reconnaissance d'empreinte digitale (S302) ; et
**caractérisé par** :
l'affichage, par le terminal, d'une seconde interface d'écran de verrouillage en réponse à une authentification réussie sur les informations d'empreinte digitale capturées lorsque les informations d'empreinte digitale capturées correspondent aux informations d'empreinte digitale préenregistrées (S303), la seconde interface d'écran de verrouillage étant différente de la première interface d'écran de verrouillage et comprenant un menu de navigation, et le menu de navigation comprenant deux ou plusieurs commandes, et les commandes comprenant une icône d'une application, ou un identifiant d'une fonction de l'application, et dans lequel les commandes ouvrent différentes applications, et l'une des commandes permet d'accéder à l'écran d'accueil ;
la réception, par le terminal, d'une quatrième opération de l'utilisateur sur la seconde interface d'écran de verrouillage (S305) ;
dans lequel la quatrième opération est une opération de glissement et un point de fin de l'opération de glissement est l'une des deux ou plusieurs commandes comprises dans le menu de navigation, en réponse à la quatrième opération, l'ouverture, par le terminal, de l'application associée à la commande et l'affichage, par le terminal, d'une interface de fonction de l'application associée à la commande (S306).

2. Procédé selon la revendication 1, dans lequel les deux ou plusieurs commandes comprennent en outre au moins l'un des éléments suivants :
une icône d'un dossier, un identifiant d'un message de notification et une icône de déverrouillage.

3. Procédé selon la revendication 2, dans lequel lorsque le menu de navigation comprend l'icône de déverrouillage, l'affichage, par le terminal, de l'écran d'accueil en réponse à la quatrième opération comprend :
la quatrième opération étant une opération de glissement et un point de fin de l'opération de glissement étant l'icône de déverrouillage, l'affichage, par le terminal, de l'écran d'accueil en réponse à la quatrième opération.

4. Procédé selon l'une quelconque des revendications 1 à 3, dans lequel la quatrième opération est l'opération de glissement, et la troisième opération et la quatrième opération sont des opérations continues d'un doigt de l'utilisateur sans quitter l'écran tactile.

5. Procédé selon l'une quelconque des revendications 1 à 4, dans lequel lorsque le terminal reçoit la troisième opération effectuée par l'utilisateur sur l'écran tactile, le terminal est dans un état d'écran désactivé, dans lequel dans l'état d'écran désactivé, l'écran tactile affiche un motif d'empreinte digitale et un emplacement du motif d'empreinte digitale est associé au dispositif de reconnaissance d'empreinte digitale ; et
la réception, par le terminal, d'une troisième opération effectuée par l'utilisateur sur l'écran tactile comprend :
la réception, par le terminal, de la troisième opération effectuée par l'utilisateur à l'emplacement auquel le motif d'empreinte digitale est affiché.

6. Procédé selon l'une quelconque des revendications 1 à 4, dans lequel la première interface d'écran de verrouillage comprend un motif d'empreinte digitale, et un emplacement du motif d'empreinte digitale est associé au dispositif de reconnaissance d'empreinte digitale ; et
la réception, par le terminal, d'une troisième opération effectuée par l'utilisateur sur l'écran tactile comprend :
la réception, par le terminal, de la troisième opération effectuée par l'utilisateur à l'emplacement auquel le motif d'empreinte digitale compris dans la première interface d'écran de verrouillage est affiché.

7. Procédé selon l'une quelconque des revendications 1 à 4, dans lequel avant la réception, par le terminal, d'une troisième opération effectuée par l'utilisateur sur l'écran tactile, le procédé comprend en outre :
la réception, par le terminal, d'un message de notification ; et
l'éclairage, par le terminal, de l'écran tactile et l'affichage de la première interface d'écran de verrouillage est affiché sur l'écran tactile, la première interface d'écran de verrouillage comprenant un motif d'empreinte digitale, et un emplacement du motif d'empreinte digitale est associé au dispositif de reconnaissance d'empreinte digitale ; et
la réception, par le terminal, d'une troisième opération effectuée par l'utilisateur sur l'écran tactile comprend :
la réception, par le terminal, de la troisième opération effectuée par l'utilisateur à l'emplacement auquel le motif d'empreinte digitale compris dans la première interface d'écran de verrouillage est affiché.

8. Procédé selon l'une quelconque des revendications 1 à 4, dans lequel, lorsqu'il y a un message de notification non lu, l'affichage, par le terminal, de la seconde interface d'écran de verrouillage en réponse à l'authentification réussie sur les informations d'empreinte digitale capturées.

9. Procédé selon l'une quelconque des revendications 1 à 8, le procédé comprenant en outre :
l'affichage, par le terminal, d'une interface de connexion par mot de passe en réponse à un échec d'authentification sur les informations d'empreinte digitale capturées ;
la réception, par le terminal, d'un mot de passe de connexion saisi par l'utilisateur sur l'interface de connexion par mot de passe ; et
l'affichage, par le terminal, de la seconde interface d'écran de verrouillage en réponse à une authentification réussie sur le mot de passe de connexion.

10. Procédé selon l'une quelconque des revendications précédentes, dans lequel la fonction de l'application est une fonction de paiement ; et
l'identifiant de la fonction de l'application est un code de paiement valide de la fonction de paiement ; ou
lorsque la commande est un identifiant de la fonction de paiement, l'affichage d'une interface de fonction d'une fonction de terminal correspondant à la commande comprend :
l'affichage, par le terminal, d'une interface de fonction de la fonction de paiement, l'interface de fonction comprenant le code de paiement valide de la fonction de paiement.

11. Procédé selon la revendication 2 ou 3, dans lequel l'identifiant du message de notification est une boîte d'invite, avant l'authentification d'empreinte digitale, la boîte d'invite comprend le message de notification affiché d'une manière chiffrée, et après que l'authentification sur les informations d'empreinte digitale capturées a réussi, la boîte d'invite comprend le contenu du message de notification ; ou
lorsque la commande est l'identifiant du message de notification, l'affichage d'une interface de fonction d'une première application associée à la commande comprend :
l'affichage, par le terminal, d'une interface de détails du message de notification, l'interface de détails comprenant le contenu du message de notification.

12. Procédé selon l'une quelconque des revendications 1 à 11, dans lequel la commande comprise dans le menu de navigation est prédéfinie, ou recommandée par le terminal, ou définie par l'utilisateur.

13. Terminal, comprenant un ou plusieurs processeurs, une mémoire, un écran tactile et un ou plusieurs programmes d'ordinateur, dans lequel le ou les processeurs, la mémoire, l'écran tactile et le ou les programmes d'ordinateur sont connectés en utilisant un ou plusieurs bus de communication ;
l'écran tactile comprend une surface tactile et un affichage ;
le ou les programmes d'ordinateur sont stockés dans la mémoire et sont configurés pour être exécutés par le ou les processeurs ; et
le ou les programmes informatiques comprennent des instructions, et les instructions sont utilisées pour effectuer le procédé d'affichage selon l'une quelconque des revendications 1 à 12.

14. Support de stockage d'ordinateur, comprenant une instruction d'ordinateur, dans lequel lorsque l'instruction d'ordinateur est exécutée sur un terminal, le terminal est activé pour effectuer le procédé d'affichage selon l'une quelconque des revendications 1 à 12.
